# EUROPÄISCHE PATENTSCHRIFT

(11) **EP 1 401 743 B1**
(45) Veröffentlichungstag und Bekanntmachung des Hinweises auf die Patenterteilung: **28.09.2005**
(21) Anmeldenummer: 02782427.5
(22) Anmeldetag: 03.07.2002
(51) Int. Cl.: B65G 1/04, B66F 9/07

(54) **TRANSPORTWAGEN ZUM EIN- UND AUSLAGERN VON TRANSPORTGUT**
TRANSFER CAR FOR LOADING AND UNLOADING TRANSPORTED GOODS
CHARIOT TRANSPORTEUR POUR LE CHARGEMENT ET LE DECHARGEMENT D'ELEMENTS DE TRANSPORT

(30) Priorität: 04.07.2001 AT 53401 U
(43) Veröffentlichungstag der Anmeldung: 31.03.2004
(73) Patentinhaber: TGW Transportgeräte GmbH, 4600 Wels (AT)
(72) Erfinder: HANSL, Rudolf, A-4813 Altmünster (AT); ROHRAUER, Markus, A-4490 St. Florian (AT)
(74) Vertreter: Secklehner, Günter
(86) Internationale Anmeldenummer: PCT/AT2002/000193
(87) Internationale Veröffentlichungsnummer: WO 2003/004385

## Beschreibung

Die Erfindung betrifft ein Förderfahrzeug, insbesondere ein Regalbediengerät, sowie ein Verfahren zum Ein- und Auslagern von Paletten mit einem derartigen Förderfahrzeug, wie im Oberbegriff der Ansprüche 1 und 35 beschrieben.

Es ist bereits bekannt, bei einem Förderfahrzeug, beispielsweise einem Regalbediengerät, auf einem Lastaufnahmemittel zum Ein- oder Auslagern eines Lastenträgers einen zusätzlichen Transportwagen vorzusehen, auf dem die Lastenträger angeordnet sind. Mit diesen zusätzlichen Transportwagen können die Lastenträger in das Regallager eingefahren und dort abgelagert werden. Dazu sind diese Transportwagen mit einem Fahrantrieb für die Fahrbewegung und Antrieb für die Hub- und Senkbewegung einer Plattform ausgestattet. Ein derartiges Verteilfahrzeug ist beispielsweise aus der DE 42 10 175 A1 und der GB 1 204 044 B bekannt. Nachteilig ist bei diesen bekannten Förderfahrzeugen mit einem eigenen Transportwagen, daß die Regallager exakt an die Ausführungsform des Förderfahrzeuges angepaßt sein müssen. Des weiteren werden die zu fördernden Paletten mit ihren Längsholmen unmittelbar an einer Plattform am Transportwagen abgesetzt, so daß durch den konstruktiv bedingten Aufbau der Paletten einerseits die maximale Hubhöhe des Lastaufnahmemittels eingeschränkt wird, sowie mit einer Senkung des Volumsnutzungsgrades des Regallagers zu rechnen ist und andererseits aufgrund der fehlenden Seitenführung der Palette über die Plattform selbst, robust aufgebaute Positioniervorrichtungen für die Halterung der Palette zumindest während des Transportes erforderlich sind.

Aus der DE 43 30 795 A1 ist ein Transportwagen zum Einlagern von Lastenträgern, insbesondere Paletten, in ein Regallager bzw. Auslagern von Lastenträgern aus einem Regallager bekannt, der über an einen Fahrantrieb gekuppelte Höhenführungsorgane, insbesondere Laufrollen, entlang von seitlich angeordneten, horizontal verlaufenden Führungsprofilen positioniert verfahrbar ist und zwei an einen Antrieb gekuppelte, relativ zu den Höhenführungsorganen in vertikaler Richtung verstellbare Stege aufweist. Die Lastenträger sind im Regallager auf den Führungsprofilen gelagert, wobei die zwischen den Längsholmen des Lastenträgers ausgebildeten Flächenabschnitte an Oberkanten der Führungsprofile abgestützt sind. Der Transportwagen unterfährt den Lastenträger, ohne diesen zu berühren. Die beiden Stege greifen in den Flächenabschnitt zwischen den Längsholmen der Palette ein und sind zwischen den Führungsprofilen bis unterhalb deren Oberkante absenkbar.

Die US 5,967,728 A beschreibt eine Trag- und Laufführung für auf dieser abzustellende Lastenträger und in dieser verfahrbare Transportwagen für die Lastenträger, die aus zwei im parallelen Abstand nebeneinander und spiegelbildlich angeordneten Trag- und Führungsprofilen besteht und jedes Trag- und Führungsprofil eine horizontal verlaufende Höhenführungsbahn für den auf dieser mit Höhenführungsorganen abstützenden Transportwagen, einen vertikal aufragenden Profilschenkel, einen an diesen anschließenden Tragsteg mit einer horizontal verlaufenden Tragfläche für den auf dieser abzustellenden Lastenträger und eine an den Tragsteg unter einem Winkel zu der horizontalen Tragfläche geneigt anschließende Zentrierleiste aufweist. Mittels den geneigten Zentrierleisten kann der ggf. exzentrisch am Transportwagen abgestützte Lastenträger während dem Absenken desselben auf die Tragflächen quer zur Längsrichtung der Trag- und Führungsprofile verschoben und zentrisch zwischen den beiden Trag- und Führungsprofilen gelagert bzw. abgestellt werden. Der Transportwagen ist dazu mit einer relativ zu den Höhenführungsorganen und senkrecht zu den Tragflächen heb- bzw. senkbare Plattform für den Lastenträger versehen.

Die EP 0 936 160 B1 offenbart ein Regallager für genormte Lastenträger, das eine Stützkonstruktion aus vertikalen Stützen, zwischen denen sich quer zur Ein- und Auslagerungsrichtung horizontale Traversen erstrecken, und paarweise oberhalb der Traversen angeordnete, sich in Ein- und Auslagerungsrichtung erstreckende schienenartige Profile aufweist. An den Profilen ist eine langgestreckte Tragfläche für die auf dieser abzustellenden Lastenträger und eine unterhalb der Tragfläche langgestreckte Höhenführungsbahn für einen rollengeführten Transportwagen mit höhenverstellbarer Plattform ausgebildet. Die Profile sind an mit der Traverse verschweißte Konsolen befestigt. Die Höhenführungsbahnen der Profile sind aufeinander zugerichtet und stützen sich die Höhenführungsorgane, insbesondere Laufrollen, in senkrechter Richtung auf diesen ab und ist dieser Transportwagen entlang der Höhenführungsbahnen in Ein- und Auslagerungsrichtung verfahrbar ausgebildet. Zwischen den Höhenführungsbahnen und der unterhalb angeordneten Traverse ist ein vertikaler Freiraum ausgebildet, sodass die Höhenführungsbahn unter der Last des Transportwagens federnd nach unten nachgeben kann.

Aus der US 3,973,685 ist ein Förderfahrzeug mit einem Lastaufnahmemittel zur Aufnahme eines Transportwagens bekannt, der eine Plattform zur bedarfsweisen Aufnahme eines Lastenträgers, insbesondere einer Palette, aufweist und der zum Ein- bzw. Auslagern des Lastenträgers mit Höhenführungsorganen versehen ist und die Höhenführungsorgane entlang von einer am Lastaufnahmemittel angeordneten horizontalen Höhenführungsbahn verfahrbar ist. Der Transportwagen ist dazu mit einem mehrere an beiden Wagenseiten angeordnete Höhenführungsorgane antreibenden, motorischen Fahrantrieb ausgestattet. Die Plattform ist mit einem Antrieb für eine vertikale Hub- bzw. Senkbewegung gegenüber den Höhenführungsorganen verbunden.

Aus der US 5,562,062 A, DE 93 19 992 U1 und der DE 34 31 580 A1 ist ein verschiebbar geführter Transportwagen bekannt, der in seitlich angeordneten Lager- und Führungsprofilen läuft. Der Transportwagen weist an seinen beiden Wagenseiten an einem Fahrantrieb gekuppelte mehrere Höhenführungsorgane, insbesondere Laufrollen, und eine relativ zu den Höhenführungsorganen heb- bzw. senkbare Plattform auf. Die Aufnahme und die Abgabe eines Lastenträgers, insbesondere einer Palette, von dem Transportwagen erfolgt mittels am Transportwagen getrennt von den Höhenführungsorganen angeordneter und in Ein- und Auslagerungsrichtung verlaufender Trag- und Verschiebemitteln, vorzugsweise Rollen oder endlos umlaufende Ketten, Bänder, Riemen. Die Trag- und Verschiebemitteln sind an einen zum Fahrantrieb für die Höhenführungsorgane zusätzlichen Antrieb gekuppelt und sind am Transportwagen ausschließlich drehbar gelagert.

Aufgabe der vorliegenden Erfindung ist es, ein Förderfahrzeug mit einem Transportwagen zu schaffen, mit dem eine sehr geringe Bauhöhe für das Einfahren der Transportwagen benötigt wird und/oder unterschiedlich ausgebildete Regallager mit derartigen Förderfahrzeugen bedient werden können.

Diese Aufgabe der Erfindung wird durch das Förderfahrzeug, wie es im Anspruch 1 beschrieben ist, gelöst. Vorteilhaft ist bei diesem Förderfahrzeug, daß durch die wahlweise Nutzung der Höhenführungsorgane des Transportwagens Lagerplätze in Regallagern beschickt werden können, in welchen das Einfahren des Transportwagens nicht möglich ist, wobei dann die Höhenführungsorgane des Transportwagens zum Abschieben der Lastenträger, insbesondere Palette, verwendet wird, wogegen in einem Regallager, welches entsprechend ausgestattet ist, die Lastenträger mit dem Transportwagen in ihre jeweilige Position direkt verbracht werden können. Dazu kommt, daß durch die Doppelfunktion der Fahrwerke die Übergabezeit an anschließende Förderabschnitte, z.B. Rollenförderbahnen, gegenüber jenen Regalbediengeräten, bei welchen die Lastenträger auch mit den Transportwagen vom Regalbediengerät an ein nachfolgendes Fördersystem übergeben werden, deutlich verringert werden. Dadurch wird ein deutlicher Spielzeit- bzw. Taktzeitgewinn erzielt, wobei gleichzeitig die Vorteile der Verwendung eines Transportwagens auf einem derartigen Regalbedienge rät weiter ausgenutzt werden können.

Vorteilhaft ist auch eine Ausführungsform nach Anspruch 2, da dadurch eine Relativverstellung des Transportwagens gegenüber dessen Führungsbahnen am Regalbediengerät bzw. Förderfahrzeug erzielt werden kann und damit die Höhenführungsorgane wahlweise zum Transport der Lastenträger oder zur Bewegung des Transportwagens herangezogen werden können.

Die Mehrfachfunktion des Transportwagens ist aber auch durch die Ausführung nach Anspruch 3 einfach möglich, da dadurch zusätzliche Vorkehrungen an dem Regalbediengerät eingespart werden können.

Gemäß Anspruch 4 ist es auch vorteilhaft, wenn die Höhenführungsorgane selbst der Höhe nach verstellbar sind und damit in ihre unterschiedlichen Funktionsstellungen verbracht werden können.

Eine einfache Lösung beschreibt auch Anspruch 5, da dadurch eine Mehrpunktführung der Lastenträger bei deren Führung und Beaufschlagung erreicht werden kann.

Eine einfache Anpassung an unterschiedliche Einlagerungs- und Ausgabehöhen sowohl im Übergabe- bzw. Übernahmebereich der Paletten als auch deren Einbringung in die Etagen des Regallagers, wird durch die Weiterbildung nach Anspruch 6 erzielt, da dadurch auch unterschiedliche Führungshöhen für den Transportwagen einfach an bestehende Regallager angepaßt werden können.

Von Vorteil ist auch eine Ausführungsvariante nach Anspruch 7, wodurch für die unterschiedlichen Einsatzzwecke der Transportwagen gegenüber dem Lastaufnahmemittel positioniert werden kann.

Auch eine weitere Ausführungsform nach Anspruch 8 ist vorteilhaft, da damit die Halterungsmittel für den Transportwagen gleichzeitig zur Funktionsumstellung der Höhenführungsorgane verwendet werden kann.

Vorteilhaft ist eine Ausführungsvariante nach Anspruch 9, da dadurch die Manipulation von Lastenträgern erheblich vereinfacht wird und die Spielzeit bzw. Wechseldauer, bis ein am Transportwagen befindlicher Lastenträger durch einen neuen Lastenträger ersetzt ist, erheblich verringert werden kann.

Die Wechselzeit der Lastenträger kann weiters durch die Ausführungsvariante nach Anspruch 10 beschleunigt werden.

Von Vorteil ist auch eine Ausführung nach Anspruch 11, da in einer Förderstellung der Fahrwerke gleichzeitig am Transportwagen mehrere Lastenträger umgesetzt werden können und dadurch eine Anhebung der Umschlagleistung im Übergabe- bzw. Übernahmebereich und im weiteren Sinne der ganzen Kommissionieranlage erreicht ist.

Eine weitere vorteilhafte Ausführungsvariante ist in den Ansprüchen 12 bis 14 beschrieben, wobei mit einer derartigen Verstellvorrichtung bei geringen Hubwegen große Massen mit überschaubarer Antriebsleistung bewegt werden können.

Gemäß Anspruch 15 ist auch die Ausbildung der Verstellvorrichtung mit Antriebsorganen von Vorteil, da in einer Förderstellung dadurch eine vollflächige Auflage von Teilbereichen des Lastenträgers an den Förderbahnen des Transportwagens möglich ist.

Weitere vorteilhafte Ausbildungen für die Verstellvorrichtung bzw. den Fahrantrieb sind in den Ansprüchen 16 bis 18 beschrieben. Durch die Fülle der möglichen Antriebsarten und das Zusammenlegen mehrerer Antriebe für eine gemeinsame Funktion ist eine einfache Anpassung und kostengünstige Ausstattung der Regalbediengeräte an unterschiedliche Einsatzarten für beispielsweise unterschiedliche Einzelgewichte bzw. Geschwindigkeiten und dgl. möglich.

Vorteilhaft ist auch eine Ausgestaltung des Transportwagens gemäß Anspruch 19, da dadurch das Verschieben der Last gegenüber dem Transportwagen bereits baulich verhindert ist und keine zusätzlichen Sicherungsvorkehrungen mehr getroffen werden müssen.

Die Weiterbildung nach Anspruch 20 ermöglicht mit Vorteil eine durchgängige Führung des Lastenträgers.

Vorteilhaft ist auch eine weitere Ausführungsvariante nach Anspruch 21, da dadurch die Führung und das Einlagern der Lastenträger vereinfacht wird. Zudem kann eine geringere Bau höhe des Regallagers erreicht werden, da ein Teil der Bauhöhe des Transportwagens zwischen den Längsholmen bzw. Abstandhaltern des Lastenträgers angeordnet werden kann.

Die weitere Ausbildung nach Anspruch 22 ermöglicht, daß eine fixe Position des Lastenträgers am Transportwagen möglich ist, so daß der Transportwagen unabhängig vom Lastenträger in unterschiedliche Betriebsstellungen verstellbar ist.

Die Weiterbildung nach Anspruch 23 ermöglicht eine geringe Bauhöhe des Lastaufnahmemittels und des Transportwagens.

Durch die Ausführungsvariante nach Anspruch 24 ist es in einfacher Weise möglich, die Lastenträger in ihren durch die Längsholme verstärkten Bereichen, also durch Angreifen an den Abstützflächen zu bewegen.

Die Ausführungsform nach Anspruch 25 ermöglicht in vorteilhafter Weise eine direkte Manipulation des Lastenträgers zur Abgabe auf anschließende Förderabschnitte bzw. Förderbahnen, ohne daß der Transportwagen verschoben werden muß, wodurch die Manipulationszeit zum Aufnehmen und Absetzen von Lastenträgern auf anschließende Förderabschnitte bzw. Förderbahnen verringert wird. Durch das Angreifen der Plattform zwischen den Längsholmen, können die Etagen des Regallagers in ihrer Höhe wesentlich niedriger ausgebildet werden, da ein Lichtraumprofil des die Palette aufnehmenden Transportwagens kleine Höhen- und Breitenabmessungen aufweist.

Ein konstruktiv vereinfachter Aufbau und eine höhere Tragfähigkeit können im Bereich der Bauweise durch die Weiterbildung nach Anspruch 26 ermöglicht werden. Dadurch können die beiden am Lastaufnahmemittel befindlichen und elektrisch miteinander gekoppelten Transportwagen während der Fahrbewegung entlang der Profile am Lastaufnahmemittel und in den Regalplätzen stets auf gleicher Höhe gehalten werden, um gemeinsam zumindest einen Lastenträger aufzunehmen.

Eine weitere Ausführungsvariante nach Anspruch 27 ermöglicht die Verwendung von standardisierten, einfach herzustellenden Bauelementen, so daß eine kostengünstige Herstellung der Führungsbahnen ermöglicht wird.

Vorteilhaft ist bei der Ausführungsvariante nach Anspruch 28, daß Schwenkbewegungen auch bei rascheren Transportbewegungen des Lastenträgers relativ zum Fahrwagen verringert werden können.

Einem Aufschaukeln des Lastenträgers gegenüber dem Tragwagen kann durch die Ausbildung nach Anspruch 29 entgegengewirkt werden.

Der Aufbau der Energie- und Datenversorgung des Transportwagens kann durch die weiteren Ausführungsvarianten nach den Ansprüchen 30 bis 34 zusätzlich vereinfacht werden.

Die Aufgabe der Erfindung wird aber auch durch das Verfahren nach Anspruch 35 gelöst. Vorteilhaft ist hierbei, daß durch die Doppelfunktion der Fahrwerke vom Transportwagen dieser im Übergabe- bzw. Übernahmebereich nach der Übergabe des Lastträgers unmittelbar danach wieder zum Empfang eines weiteren Lastträgers bereitsteht und dadurch die Übergabezeiten wesentlich verringert und die Verweilzeiten des Förderfahrzeuges im wesentlich gänzlich unterbunden werden können. Dadurch wird ein deutliche Anhebung der Produktivität des Förderfahrzeuges erreicht und die Lagerungs- bzw. Umschlagkosten durch den Einsatz des erfindungsgemäßen Förderfahrzeuges wesentlich minimiert.

Von Vorteil ist auch die Maßnahme nach Anspruch 36, da durch die entsprechende Ausgestaltung des Fahrantriebes sowohl die Kraft zum Abschieben eines Lastenträgers als auch zum gleichzeitigen Aufnehmen eines neuen Lastenträgers aufgebracht werden kann und keine Geschwindigkeitsbeeinträchtigung oder Reduktion der Spielzeit auftritt, wenn beide Lastenträger beladen sind.

Vorteilhaft sind aber auch die Maßnahmen nach den Ansprüchen 37 bis 40, wodurch eine Vielzahl von Optimierungsmöglichkeiten bzgl. der Spielzeit vorgegeben sind, indem auf einfache Art und Weise logistische Abläufe angewandt werden, ohne zusätzlichen Mehraufwand für die Integration weiterer Vorrichtungen, wie Hubtische, Umlagerplätze etc. betreiben zu müssen.

Schließlich ist auch die Maßnahme nach Anspruch 41 vorteilhaft, da dadurch eine Optimierung der Verfahrzeiten der Lastenträger in den Übergabe- und Übemahmestationen von Lastenträgern an bzw. von Fördervorrichtungen erheblich beschleunigt werden kann, ohne daß der Vorteil der Manipulation der Lastenträger in der Regalanlage verloren geht oder ein erheblich höherer mechanischer Aufwand durch zusätzliche Antriebe oder dgl. benötigt wird.

Die Erfindung wird im nachfolgenden anhand der in den Zeichnungen dargestellten Ausführungsbeispiele näher erläutert.

Es zeigen:
- Fig. 1: eine Kommissionieranlage mit mehreren Förderabschnitten und zwischen diesen und einem Regallager, insbesondere Blocklager, verfahrbaren Förderfahrzeug, in Draufsicht und stark vereinfachter, schematischer Darstellung;
- Fig. 2: das Regallager und Förderfahrzeug in Ansicht gemäß den Linien II-II in Fig. 1, in stark vereinfachter, schematischer Darstellung;
- Fig. 3: einen Teilbereich des Lastaufnahmemittels und einen in diesem Bereich befindlichen Transportwagen mit einer sich in einer abgesenkten Stellung befindlichen Plattform, in Seitenansicht und stark vereinfachter, schematischer Darstellung;
- Fig. 4: einen Teilbereich des Lastaufnahmemittels und einen in diesem Bereich befindlichen Transportwagen mit einer sich in einer angehobenen Stellung befindlichen Plattform, in Seitenansicht und stark vereinfachter, schematischer Darstellung;
- Fig. 5: einen Teilbereich des Lastaufnahmemittels mit in diesem Bereich befindlichen Transportwagen, in Draufsicht und stark vereinfachter, schematischer Darstellung;
- Fig. 6: zwei nebeneinander am Lastaufnahmemittel positionierte Transportwagen im Übergabe- bzw. Übernahmebereich mit den in einer Förderstellung befindlichen Fahrwerken, in Teilansicht gemäß den Linien VI-VI aus Fig. 1 und in stark vereinfachter, schematischer Darstellung;
- Fig. 7: zwei nebeneinander am Lastaufnahmemittel positionierte Transportwagen im Übergabe- bzw. Übernahmebereich mit den in einer Ruhestellung befindlichen Fahrwerken, gemäß Fig. 6 und in stark vereinfachter, schematischer Darstellung;
- Fig. 8: einen Übergabe- bzw. Übernahmebereich zwischen Förderabschnitten und dem nur teilweise eingetragenen Förderfahrzeug mit Lastaufnahmemittel, in Seitenansicht und stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

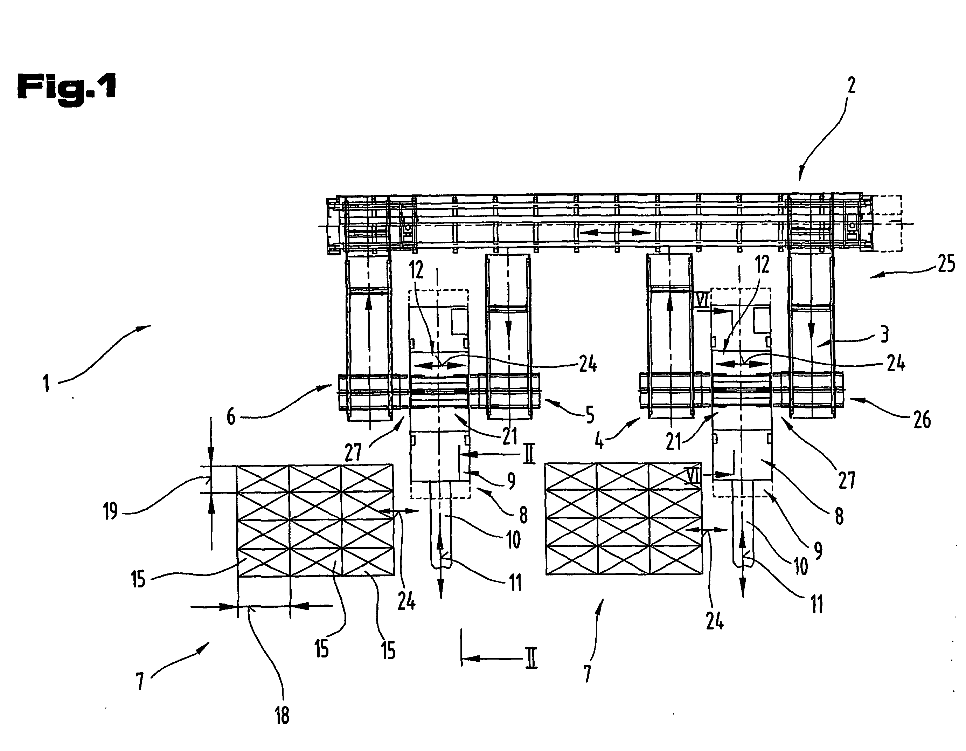

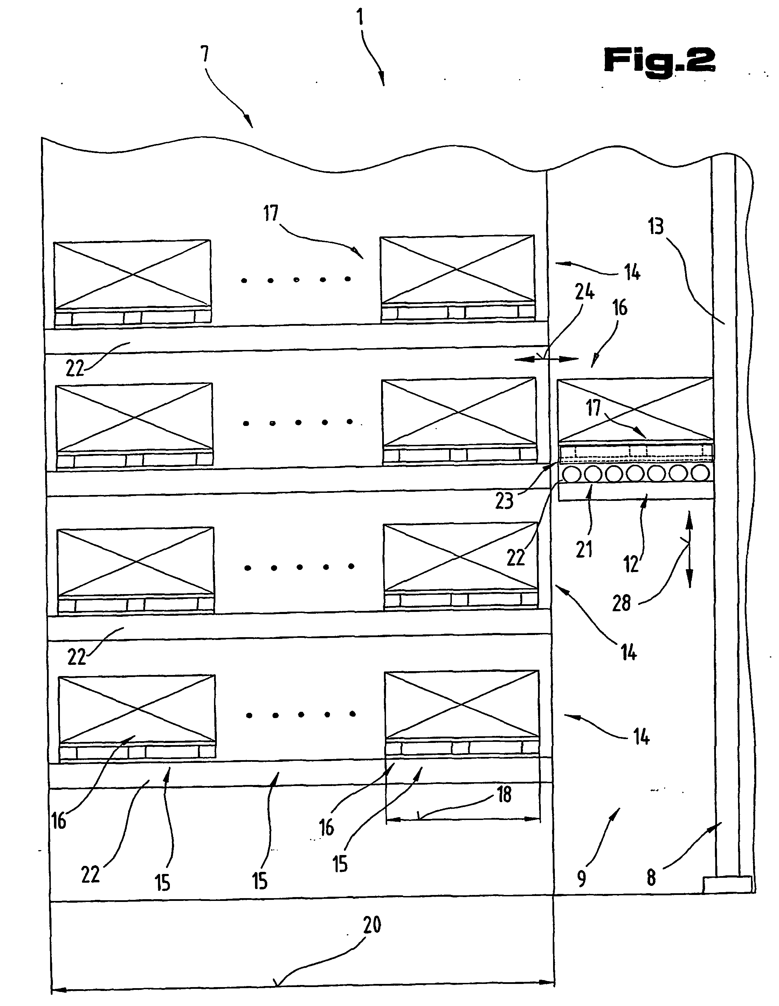

In den gemeinsam beschriebenen Fig. 1 und 2 ist ein beispielhafter Aufbau einer Kommissionieranlage 1 oder sind Teilbereiche davon in unterschiedlichen Ansichten und stark vereinfachter Darstellung gezeigt, die mehrere Förderabschnitte 2 bis 6 und zumindest ein oder, wie in dieser Fig. gezeigt, zwei Regallager 7 aufweist. Zwischen einzelnen Förderabschnitten 3, 4; 5, 6 und dem Regallager 7, insbesondere Blocklager, ist zumindest ein Förderfahrzeug 8, insbesondere ein Regalbediengerät 9, unmittelbar an der Aufstandsfläche oder - wie dargestellt - über eine Fahrschiene 10 in Gassenrichtung - gemäß Doppelpfeil 11 - verfahrbar ausgebildet. Derartige Regalbediengeräte 9 mit einem in einer Höhe verfahrbarem Lastaufnahmemittel 12 sind bereits allgemeiner Stand der Technik und beispielsweise aus der DE 44 05 952 A1 oder DE 195 34 291 A1 oder DE 196 14 660 A1 oder FR 2 549 814 bekannt. Das in Richtung der Höhe eines Mastes 13 verstellbare Lastaufnahmemittel 12 ist über nicht weiters dargestellte Höhen- und/oder Seitenführungsorgane auf zumindest einer Führungsbahn am Mast geführt und über eine Antriebseinrichtung entlang der Führungsbahn im wesentlichen vertikal verstellbar. Das Regallager 7 weist in mindestens einer Etage 14 angeordnete Regalplätze 15 für Lastenträger 16 auf. Die Lastenträger 16 sind insbesondere durch Paletten, die in ihrer Länge 18 größer bemessen sind als in ihrer Breite 19, und bevorzugt aus Holz oder Kunststoff oder

Metall etc. gebildet. Die Etagen 14 weisen eine Tiefe 20 auf, die zur Aufnahme von acht bis zehn Lastenträger 16, die bevorzugt als Paletten 17 mit entsprechendem Lagergut ausgebildet sind, geeignet sind. Wie aus der Fig. 2 ersichtlich, ist das Lastaufnahmemittel 12 zur Aufnahme eines Transportwagens 21, der eine noch näher zu erläuternde Plattform zur bedarfsweisen Aufnahme des Lastenträgers 16, insbesondere Palette 17, aufweist, ausgebildet. Der Transportwagen 21 ist in Flachbauweise ausgebildet und läuft in horizontalen winkelartigen Profilen 22, die einerseits Bestandteil des Regallagers 7 und andererseits als kurze Führungsbahn 23 für den Transportwagen 21 auf dem Lastaufnahmemittel 12 angeordnet sind. Die Profile 22 des Regallagers 7 sind C-förmig oder I-förmig ausgebildet und dienen mit ihrem Unterflansch dem Transportwagen 21 als Fahrschiene und mit ihrem Oberflansch als Abstellfläche für die Lastenträger 16. Im Gegensatz dazu sind die Profile 22 am Lastaufnahmemittel 12 im wesentlichen L-förmig ausgebildet.

Die Lastenträger 16 sind in den Etagen 14 des Regallagers 7 hintereinander einlagerbar und über mehrere Etagen übereinander an den Profilen 22, insbesondere auf dem Oberflansch der Profile 22, abgestützt angeordnet. Über den entlang der Profile 22 des Regallagers 7 verfahrbaren Transportwagen 21 kann ein Lastenträger 16 aus einer Etage 14 ein- bzw. ausgelagert werden und vom Lastaufnahmemittel 12 in die Etage 14 oder von der Etage 14 zum Lastaufnahmemittel 12 gefördert werden. Eine Fahrbewegung - gemäß Doppelpfeil 24 - des Transportwagens 21 verläuft quer zur Gassenrichtung - gemäß Doppelpfeil 11 - des Regalfahrzeuges 8. Eine Längserstreckung des Lastenträgers 16, insbesondere der Palette 17, ist in Richtung seiner Fahrbewegung - gemäß Doppelpfeil 24 - ausgerichtet und eine Längserstreckung des Transportwagens 21 verläuft parallel zum Lastenträger 16 und quer zur Gassenrichtung - gemäß Doppelpfeil 11 - des Förderfahrzeuges 8. Eine Länge des Transportwagens 21 ist an die Länge 18 der Palette 17 angepaßt. Die Paletten 17 werden in Richtung ihrer Längserstrekkung in den einzelnen Etagen 14 des Regallagers 7 ein- bzw. ausgelagert.

Der Transportwagen 21 wird von dem Förderfahrzeug 8 zu einer Etage 14 gebracht bzw. von dieser abgeholt und fährt in einem durch die Fahrschiene 10 vorgegebenen Regalgang hin und her bis zu dem für die Ein- und Auslagerung vorbestimmten Regalplatz 15.

Wie aus der Fig. 1 weiters zu entnehmen, ist der Regalgang für das Förderfahrzeug 8 zumindest bereichsweise durch zwei Förderabschnitte 4, 5 begrenzt. Die Förderabschnitte 2 bis 6 können beispielsweise durch Fördervorrichtungen, insbesondere Rollenförderer oder endlos umlaufende Förderer, z.B. Kettenförderer, Doppelgurtbandförderer etc., gebildet werden. Die Förderabschnitte 2 bis 6 bilden einen Vorzonenbereich 25, in dem eine Vereinzelung und/oder Sortierung in Verteilerlinien und/oder eine Bereitstellung in Zuführlinien von Lastenträgern 16, insbesondere Paletten 17, durchgeführt wird und die vereinzelten Lastenträger 16 im wesentlichen parallel zur Gassenrichtung - gemäß Doppelpfeil 11 - verlaufender Richtung angeordneten Förderabschnitten 3; 5 in einer Bereitstellungsposition 26 positioniert werden. Befindet sich das Förderfahrzeug 8, insbesondere das Lastaufnahmemittel 12 in einem Übergabe- bzw. Übernahmebereich 27 zwischen diesem und einem der Förderabschnitte 3; 4; 5; 6, kann der Transportwagen 21 mit oder ohne Lastenträger 16 wahlweise in einem der Förderabschnitte 3; 4; 5; 6 verfahren und die quer zur Förderrichtung antransportierten Lastenträger 16 in seiner Bereitstellungsposition 26 durch Anheben der Plattform aufnehmen.

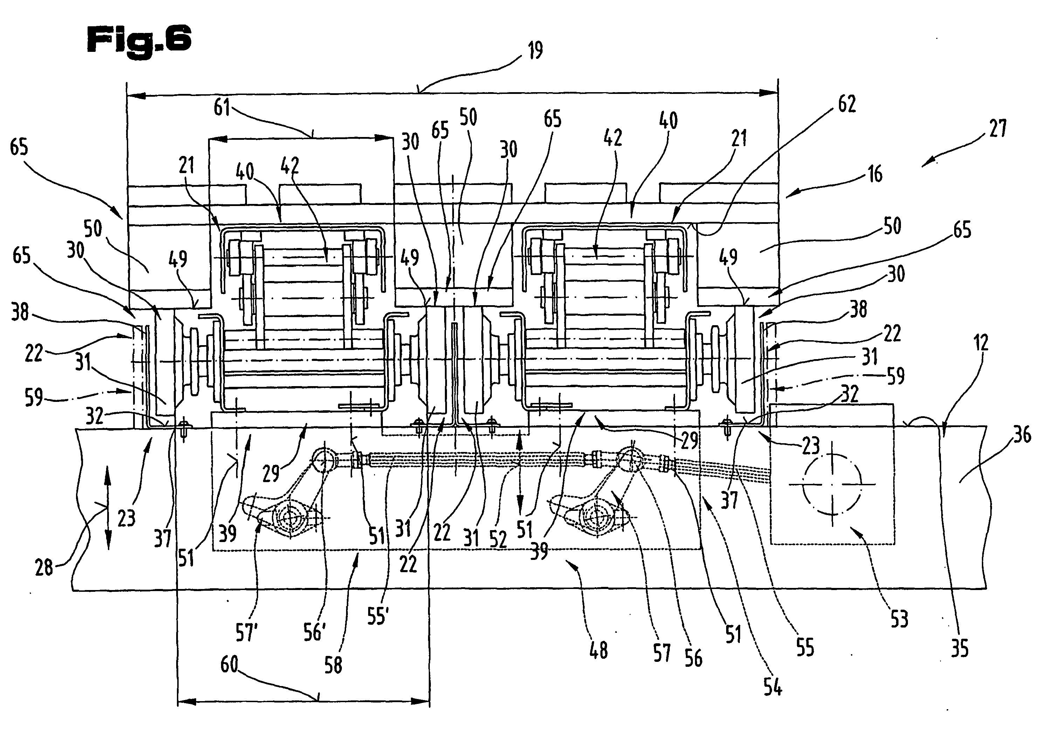

Anderenfalls ist es auch möglich, daß in dem Übergabe- bzw. Übernahmebereich 27 ein vom Transportwagen 21 am Lastaufnahmemittel 12 aufgenommener Lastenträger 16 durch Anheben von Höhenführungsorganen mit dem Lastenträger 16 in Antriebsverbindung steht und den Lastenträger 16 unmittelbar über den Transportwagen 21 beispielsweise an eine Abförderlinie fördert. Zum besseren Verständnis dieses Förderns des Lastenträgers 16 beispielsweise in den Förderabschnitt 4; 6 wird dieses anhand der Fig. 6 bis 8 näher erläutert.

Es sei an dieser Stelle ausdrücklich darauf hingewiesen, daß der Aufbau der vorliegenden Kommissionieranlage 1 nur als Beispiel zu sehen ist und natürlich die Möglichkeit besteht, daß ein oder mehrere benachbart zueinander angeordnete, synchron oder asynchron gesteuerte Förderfahrzeuge 8 zwischen dem Regallager 7 und zumindest einem Förderabschnitt 3; 4; 5; 6 angeordnet werden können.

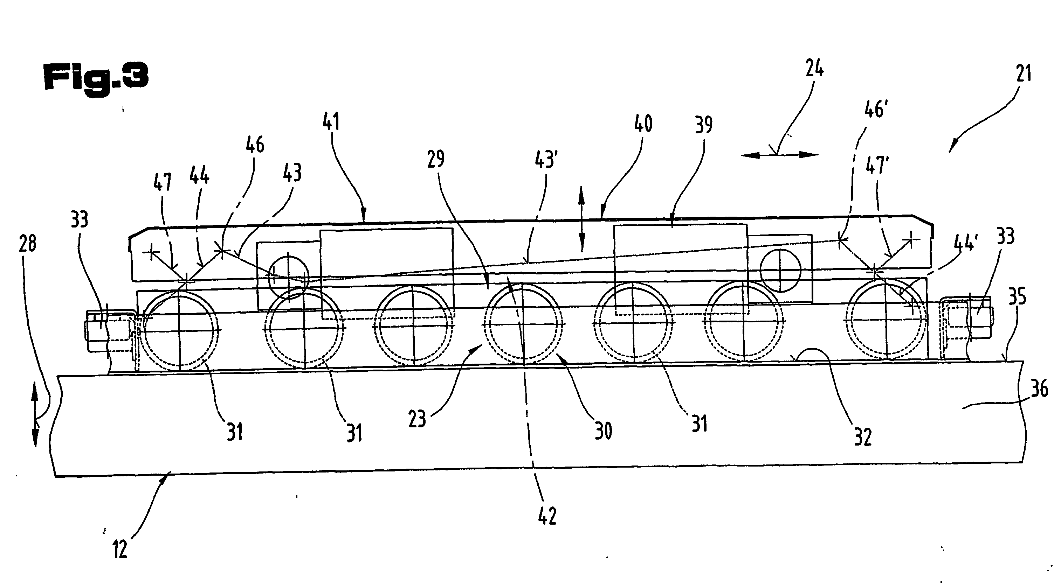

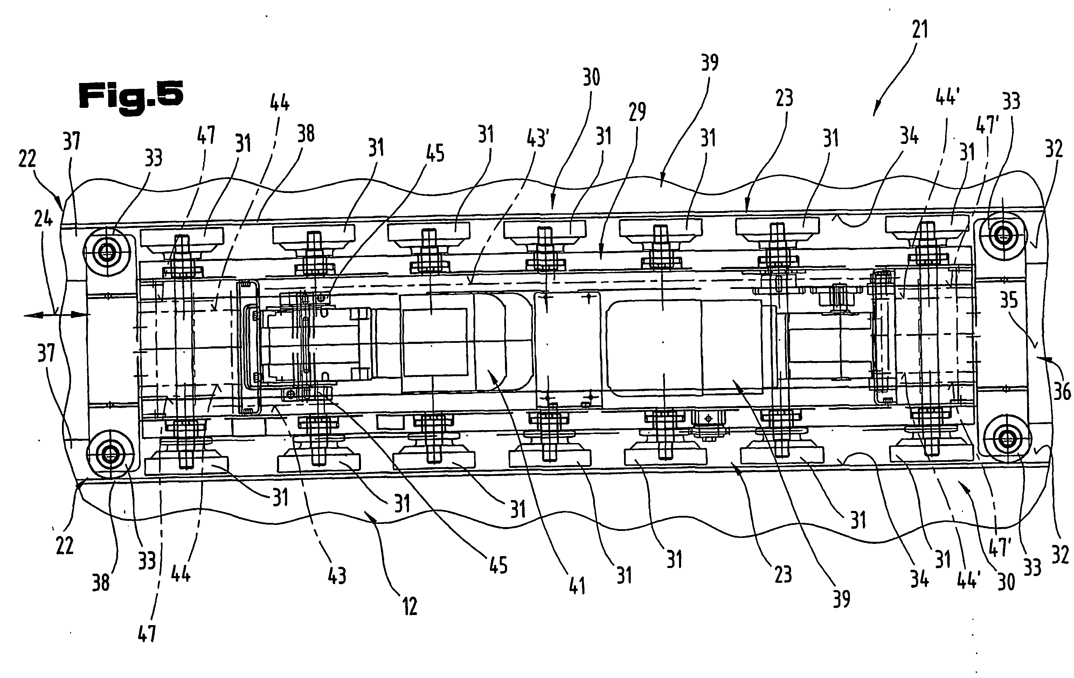

Zum besseren Verständnis des Aufbaues und der Funktion des Transportwagens 21 ist dieser in den nachfolgenden Fig. 3 bis 5 in unterschiedlichen Ansichten und stark vereinfacht gezeigt und erläutert. Gemäß diesen Fig. befindet sich der Transportwagen 21 am Lastaufnahmemittel 12, welches, wie bereits anfänglich erwähnt, in vertikaler Richtung - gemäß Doppelpfeil 28 - entlang eines in dieser Figur nicht ersichtlichen Mastes des Förderfahrzeuges verstellbar ist.

Der Transportwagen 21 besteht im wesentlichen aus einem Tragrahmen 29, der teilweise mit einem Boden zur Aufnahme weiterer Bauteile versehen ist, und an seinem Tragrahmen 29 sind seitlich in Richtung seiner Längserstreckung Fahrwerke 30 angeordnet. Jedes der Fahrwerke 30 weist mehrere in einer Reihe hintereinander und in einem quer zur Fahrbewegung - gemäß Doppelpfeil 24 - bemessenen Abstand nebeneinander angeordnete Höhenführungsorgane 31, insbesondere Führungsrollen, die an Höhenführungsbahnen 32 zumindest zeitweise abrollbar aufliegen und an seinen gegenüberliegenden Stimbereichen mit jeweils zumindest zwei Seitenführungsorganen 33 versehen sind, die an Seitenführungsbahnen 34 abrollbar aufliegen, auf.

Die in Längserstreckung in äquidistanten Abständen hintereinander angeordneten Höhenführungsorgane 31 sind durch um quer zur Fahrbewegung - gemäß Doppelpfeil 24 - des Transportwagens 21 ausgerichtete Achsen umlaufende Führungsrollen und die Seitenführungsorgane 33 durch um senkrecht auf eine Transportebene 35 des Lastaufnahmemittels 12 ausgerichtete Achsen umlaufende Führungsrollen gebildet.

Die Höhenführungsorgane 31 jeder Längsseite sind antriebsmäßig über eine nicht weiters dargestellte Kette miteinander verbunden oder in mehrere Gruppen in Richtung der Fahrbewegung - gemäß Doppelpfeil 24 - angeordnet. Die Höhen- und Seitenführungsbahnen 32, 34 sind durch winkelartige Profile 22, deren horizontaler, mit einem Tragrahmen 36 des Lastaufnahmemittels 12 verbundener Schenkel 37 die Höhenführungsbahnen 32 für die Höhenführungsorgane 31 und die aufragenden Schenkel 38 die Seitenführungsbahnen 34 für die Seitenführungsorgane 33 bilden. Die im Querschnitt etwa L-förmig ausgebildeten, die Höhen- und Seitenführungsbahnen 32 aufweisenden Führungsbahnen 23 sind durch zumindest im Bereich der Höhen- und Seitenführungsbahnen 32 gehärtete Profile 22 aus Metall gebildet.

Zwei quer zur Fahrbewegung - gemäß Doppelpfeil 24 - voneinander distanzierte Höhenführungsorgane 31 sind zum Teil über eine gemeinsame Achse miteinander verbunden. Daher können auch einige der Höhenführungsorgane 31 auch nur über einen Achsstummel mit dem Tragrahmen 29 verbunden werden. Der Transportwagen 21 ist mit wenigstens einem sich am Tragrahmen 29 abstützenden Fahrantrieb 39 für die vom Förderfahrzeug 8, insbesondere dem Lastaufnahmemittel 12, losgelöste Fahrbewegung - gemäß Doppelpfeil 24 - entlang der Profile im Regallager oder Profile 22 im Übergabe- bzw. Übernahmebereich versehen und versetzt durch die Antriebsverbindung des Fahrantriebes 39 mit den Fahrwerken 30 die Höhenführungsorgane 33 derselben oder nur einzelne Gruppen von Höhenführungsorganen 33 in eine Drehbewegung, wodurch der Transportwagen 21 gegenüber dem Lastaufnahmemittel 12 der Höhe und Seite nach geführt verfahrbar ist. Der Fahrantrieb 39 weist einen steuerbaren Antriebsmotor, insbesondere Schrittschalt- oder Servomotor, auf, so daß durch entsprechende Programmierung eine einfache Drehzahlregelung der Umfangsgeschwindigkeit der synchron angetriebenen Höhenführungsorgane 31 einfach erreicht werden kann. Natürlich können auch Synchron- oder Asynchronmotoren unter Zwischenschaltung einer Getriebeanordnung als Fahrantrieb 39 verwendet werden.

Natürlich besteht auch die Möglichkeit, daß die Fahrwerke 30 ausschließlich zur Lastüberleitung über die Höhenführungsorgane 31 in die Höhenführungsbahnen 32 eingesetzt werden und zur Fahrbewegung - gemäß Doppelpfeil 24 - ein vom Fahrwerk 30 unabhängiger Fahrantrieb 39, welcher mit mehreren einreihig hintereinander angeordneten Antriebsorganen verbunden ist, infolge der Drehmomentenbeaufschlagung den Transportwagen 21 in eine Fahrbewegung - gemäß Doppelpfeil 24 - versetzt.

Wie aus den Fig. weiters ersichtlich, weist der Transportwagen 21 zumindest eine Plattform 40 auf, die mit einem sich am Tragrahmen 29 abstützenden Antrieb 41 für eine Hub- bzw. Senkbewegung relativ zu den Fahrwerken 30 in etwa senkrecht zur Transportebene 35 wirkungsverbunden ist. Die Plattform 40 ist am Tragrahmen 29 des Transportwagens 16 angeordnet, wobei die Plattform 40 über zumindest eine zwischen dieser und dem Tragrahmen 29 angeordnete Anhebevorrichtung 42 heb- und senkbar ist. Eine derartige Anhebevorrichtung 42 kann natürlich durch alle aus dem Stand der Technik bekannte, eine Relativverstellung zwischen der Plattform 40 und dem Fahrwerk 30 bewirkende Stellantriebe, wie beispielsweise Pneumatik-, Hydraulik-, Elektrikantrieb oder Hub- bzw. Senkkulissenelemente etc. gebildet werden. Im vorliegenden Ausführungsbeispiel wird die Anhebevorrichtung 42 durch ein Schubkurbelwerk gebildet. Dieses weist mehrere kniehebelartige Übertragungselemente 43, 43', 44, 44' zur Umsetzung der Drehbewegung des Antriebes 41 in eine Hub- bzw. Senkbewegung der Plattform 40 auf. Zumindest ein Antriebsflansch 45 ist gelenkig mit zwei über ein Gelenk 46 miteinander verbundenen Übertragungselementen 43, 44 nach Art eines Kniehebels verbunden, wobei das freie Ende des Übertragungselementes 44 wiederum gelenkig mit dem Tragrahmen 29 befestigt ist.

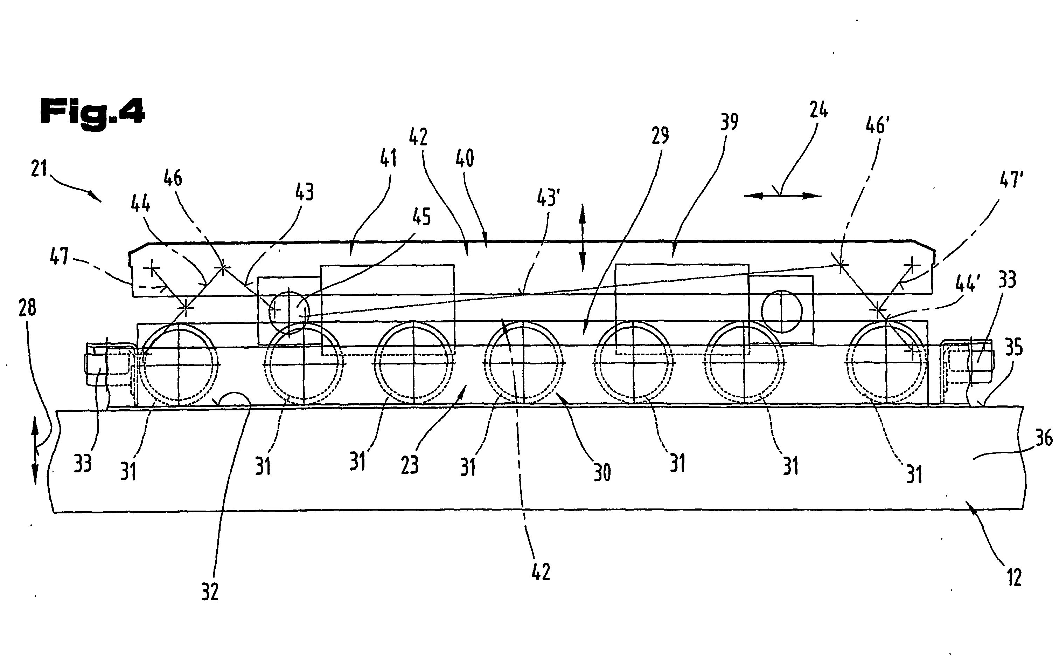

Etwa im Mittenbereich des sich zwischen dem Tragrahmen 29 und dem Gelenk 46 erstreckenden Übertragungselementes 44 ist ein ausgehend vom Mittenbereich winkelig zu dem Übertragungselement 44 verlaufender und mit der Plattform 40 versetzt zu dem Gelenk 46 gelenkig verbundener Stellhebel 47 vorgesehen. Das Gelenk 46 ist über das weitere, winkelig zum Übertragungselement 43 verlaufende Übertragungselement 43' mit einem weiteren Gelenk 46' verbunden, das an einem weiteren gelenkig an den Tragrahmen 29 befestigten Übertragungselement 44' angeordnet ist. Die Übertragungselemente 44, 44' sind spiegelsymmetrisch und versetzt zueinander ausgerichtet. Durch die exzentrische Lagerung der Übertragungselemente 43, 43' am Antriebsflansch 45 oder an den Antriebsflanschen 45 wird infolge einer Drehbewegung des- oder derselben entsprechend der Stellung die Plattform 40 in einer angehobenen oberen Stellung, wie in Fig. 4 dargestellt, oder in einer unteren abgesenkten Stellung, wie in Fig. 3 dargestellt, positioniert gehalten. Die Verstellbewegung der Plattform 40 relativ zum Lastaufnahmemittel 12 erfolgt im wesentlichen senkrecht zur Transportebene 35 des Lastaufnahmemittels 12.

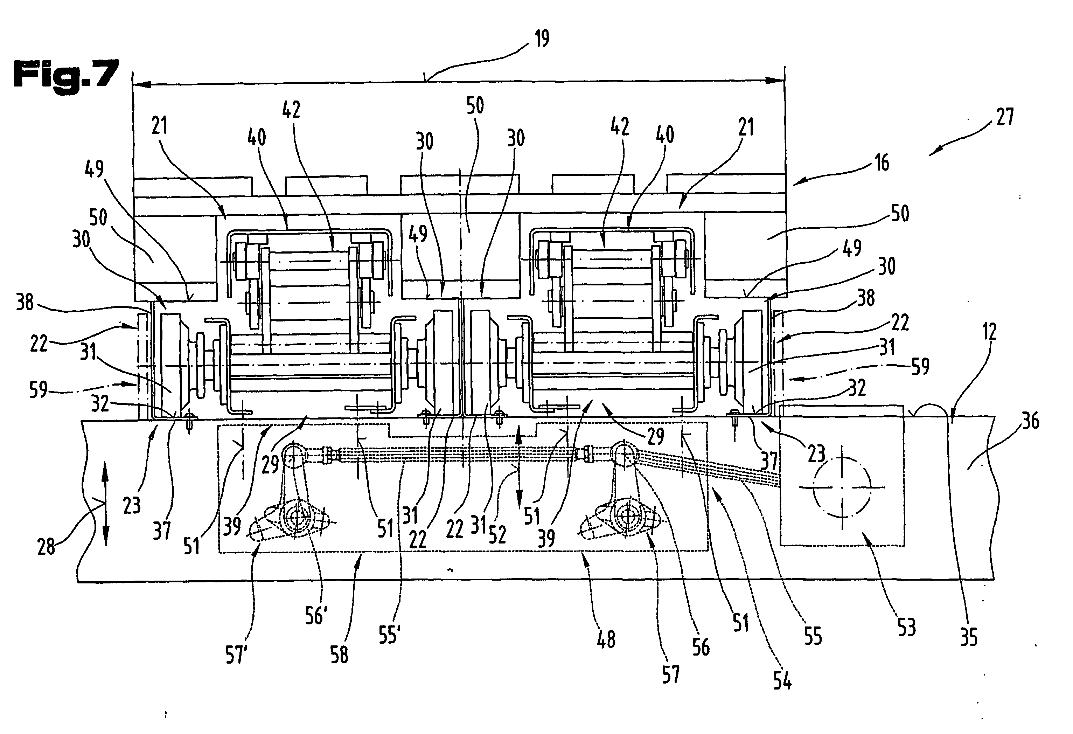

In den gemeinsam beschriebenen Fig. 6 und 7 ist der Übergabe- bzw. Übernahmebereich 27 mit einem Teilbereich des Lastaufnahmemittels 12 mit sich in diesem Bereich befindlichen Lastenträger 16 in Seitenansicht gezeigt, wobei in der Fig. 6 sich der Lastenträger 16 in einer Förderstellung befindet und in der Fig. 7 sich der Lastenträger 16 in einer gegenüber dem Lastaufnahmemittel 12 lagepositionierten Ruhestellung befindet. Wie diesen Figuren zu entnehmen, sind dem Lastenträger 16 in Richtung seiner Breite 19 zwei parallele und synchron zueinander gesteuerte Transportwagen 21 zum bedarfsweisen Aufnehmen eines Lastenträgers 16, insbesondere Palette 17, angeordnet, die synchron in Richtung der Fahrbewegung - gemäß Doppelpfeil 24 - entlang den Führungsbahnen 23, insbesondere der Höhen- und Seitenführungsbahnen 32, 34, am Lastaufnahmemittel 12 und der Profile 22 des Regalplatzes 15 der Höhe und Seite nach geführt verfahrbar sind. Hierzu sind aus dem Stand der Technik bekannte Wegegleichlaufsteuerungen einzusetzen. Die Transportwagen 16 weisen, wie bereits oben beschrieben, jeweils die Plattform 40 zur bedarfsweisen Aufnahme des Lastenträgers 16, insbesondere der Palette 17, und an den gegenüberliegenden Längsseiten die Fahrwerke 30 sowie jeweils zumindest einen Fahrantrieb 39 für die vom Lastaufnahmemittel 12 losgelöste Fahrbewegung - gemäß Doppelpfeil 24 - auf. Der Fahrantrieb 39 wird im vorliegenden Ausführungsbeispiel durch die antreibbaren Höhenführungsorgane 31 der Fahrwerke 30 gebildet.

Der Antrieb 41 für eine Hub- bzw. Senkbewegung relativ zu den Fahrwerken 30 in etwa senkrecht zur Transportebene 35 ist in dieser Fig. nicht ersichtlich.

Gemäß der Erfindung ist den Fahrwerken 30 bzw. den Höhenführungsorganen 31 wenigstens eine Verstellvorrichtung 48 zugeordnet, die eine erste Ruhestellung - gemäß Fig. 7 - aufweist, in der die Führungsorgane 31 des Transportwagens 21 auf den Höhenführungsbahnen 32 der Profile 22 abgestützt sind und zumindest eine weitere Förderstellung - gemäß Fig. 6 - aufweist, in der die Höhenführungsorgane 33 außer Eingriff mit den Höhenführungsbahnen 32 der Profile 22 sind und die Höhenführungsorgane 31 bedarfsweise einen Lastenträger 16 über den Fahrantrieb 39 durch das Abheben bzw. außer Eingriff bringen der Höhenführungsorgane 31 von den Höhenführungsbahnen 32 verstellbar oder verschiebbar lagern. In der Ruhestellung ist der Transportwagen 21 am Lastaufnahmemittel 12 oder im Regallager entlang den Profilen geführt verfahrbar. Daher kommen in der Förderstellung der Lastenträger 16 und die Höhenführungsorgane 31 aneinander zum Anliegen, so daß Abstützflächen 49 von Längsholmen 50 des Lastenträgers 16 und Mantelflächen der Höhenführungsorgane 31 einander berühren und zumindest eines der Fahrwerke 31 jedes Transportwagens 21 eine Förderbahn, insbesondere einen Rollenförderer, für den Transportwagen 21 im Übergangsbereich 27 bildet. Durch synchrone Varüerung der Antriebsdrehzahlen der Fahrantriebe 39 der beiden Transportwagen 21 kann die Umfangsgeschwindigkeit und somit die Fördergeschwindigkeit des Lastenträgers 16 durch entsprechende Steuerung beliebig verändert werden. Wie auch aus der Fig. 6 erkenntlich, hat eine derartige Anordnung den großen Vorteil, daß in der Förderstellung durch die Abstützung des Lastenträgers 16 über die Höhenführungsorgane 31 auch in seinem Mittenbereich hohe Lasten aufgenommen und transportiert werden können.

Natürlich ist es im Rahmen der Erfindung auch möglich, daß beim Transport von breiteren und/oder längeren Lastenträger 16, wie beispielsweise einer Gitterbox, mehr als ein, beispielsweise zwei Transportwagen 21 quer zur Richtung der Fahrbewegung - gemäß Doppelpfeil 24 - nebeneinanderliegend und/oder in Richtung der Fahrbewegung - gemäß Doppelpfeil 24 - hintereinanderliegend angeordnet sind, die entlang von Führungsbahnen 23 und der Profile 22 der Regalplätze 15 der Höhe und Seite nach geführt und elektrisch synchron angetrieben sind.

Die Verstellvorrichtung 48 ist am Lastaufnahmemittel 12 für den Transportwagen 21 angeordnet und mit Mitnahmeorganen 51, wie diese nur schematisch durch strichpunktierte Linien dargestellt sind, zur Verbindung mit den Transportwagen 21 ausgestattet. Über die Mitnahmeorgane 51 werden die beiden Transportwagen 21 in ihrer angehobenen Förderstellung - siehe Fig. 6 - auf dem Lastaufnahmemittel 12 positioniert gehalten, so daß ein störungsfreies Übergeben bzw. Übernehmen auch von Lastenträger 16 mit hohem Gewicht möglich ist. In der abgesenkten Ruhestellung - siehe Fig. 7 - der Transportwagen 12 sind die Mitnahmeorgane 51 außer Eingriff mit den Transportwagen 21 und können die beiden Transportwagen 21 synchron zueinander von dem Lastaufnahmemittel 12 in die Regalplätze 15 entlang der Profile 22 des Regallagers 7 einfahren und einen oder zwei hintereinanderliegende Lastenträger 16 unterfahren. Nachdem die quer zur Richtung der Fahrbewegung - gemäß Doppelpfeil 24 - nebeneinanderliegenden Transportwagen 21 den zumindest einen Lastenträger 16 unterfahren haben, werden die Plattformen 40 der Transportwagen 21 synchron angehoben und der zumindest eine Lastenträger 16 von den Profilen 22 des Regalplatzes 15 abgehoben und von diesem auf das Lastaufnahmemittel 12 befördert. Der Lastenträger 16 ist während der Fahrbewegung der Transportwagen 21 auf den Plattformen 40 abgestützt. Für die synchrone Fahrbewegung - gemäß Doppelpfeil 24 - und Hubbewegung - gemäß Doppelpfeil 52 - sind die beiden Fahrantriebe 39 sowie die beiden Antriebe 41 für die Hub- bzw. Senkbewegung der Transportwagen 21 zueinander synchronisiert angetrieben, so daß die Transportwagen 21 paarweise miteinander zusammenwirken. Die elektrische Koppelung der beiden Fahrantriebe 39 wird durch eine Wegegleichlaufsteuerung gebildet, so daß sich beide Transportwagen 21 während der Fahrbewegung - gemäß Doppelpfeil 24 -entlang der Profile 22 am Lastaufnahmemittel 12 und in den Regalplätzen 15 stets auf gleicher Höhe befinden, um gemeinsam einen Lastenträger 16 - wie in den Fig. 6 und 7 eingetragen - oder mehrere - wie nicht weiters dargestellt -, bevorzugt zwei in Richtung der Fahrbewegung - gemäß Doppelpfeil 24 - hintereinanderliegende Lastenträger 16 aufzunehmen. Eine Hubrichtung - gemäß Doppelpfeil 52 - verläuft in etwa senkrecht zur Transportebene 35 des Lastaufnahmemittels 12 und bevorzugt in etwa parallel zur Verstellvorrichtung - gemäß Doppelpfeil 28. Im vorliegenden Ausführungsbeispiel ist die Verstellvorrichtung 48 durch ein über einen Motor 53 antreibbares Schubkurbeltriebwerk 54 mit kniehebelartigen Schubstangen 55 gebildet. Die vom Motor 53 vorkragende Schubstange 55 ist an einem dem Motor 53 gegenüberliegenden Ende gelenkig mit über ein Gelenk 57 miteinander verbundenen weiteren Schubstange 55' und Hubelement 57 nach Art eines Kniehebels verbunden, wobei das Hubelement 57 exzentrisch bevorzugt gegenüber dem Lastaufnahmemittel 12 gelagert ist und über seinen freien Endbereich an einem Hubtisch 58 befestigt ist. Das Gelenk 56 ist über eine parallel zur Transportebene 35 verlaufende weitere Schubstange 55' mit einem weiteren Gelenk 56' verbunden, das an einem weiteren gelenkig, beispielsweise am Lastaufnahmemittel 12 befestigten Hubelement 57' angeordnet ist. Durch die Festlegung der Schwenkachsen der Hubelemente 57, 57' gegenüber dem Lastaufnahmemittel 12 ist der Hubtisch 58 über diese relativ zum Lastaufnahmemittel 12 schräg oder in etwa senkrecht zur Transportebene 35 verstellbar ausgebildet. Dadurch ist das Schubkurbeltriebwerk 54 zur Umsetzung einer linearen Schubbewegung der Schubstangen 55, 55' in eine Hub- bzw. Senkbewegung bzw. Relativverstellung des Hubtisches 58 gegenüber dem Lastaufnahmemittel 12 ausgebildet.

In einer Förderstellung werden gemäß diesem Ausführungsbeispiel über den Hubtisch 58 beide nebeneinanderliegenden Transportwagen 21 gleichzeitig von den Führungsbahnen 23 angehoben und mit den Stützflächen 49 des Lastenträgers 16 in Eingriff verbracht. In einer angehobenen Förderstellung sind der Hubtisch 58 und der Transportwagen 21 über gegeneinander positionierende Einrichtungen, wie bewegungsfest mit dem Hubtisch 58 befestigte Positionierstifte, elektrisch oder pneumatisch oder hydraulisch verstellbare Positionierstifte, und/oder Mitnahmeorgane 51 zueinander positioniert und lösbar miteinander verbunden.

Natürlich besteht auch die Möglichkeit, daß anstatt des mechanischen Aufbaues eines Schubkurbeltriebwerkes 54 entsprechende druckmittelbeaufschlagte Stellantriebe, wie beispielsweise Pneumatik- oder Hydraulikantrieb oder elektrisch betätigbare Stellantriebe eingesetzt werden.

Wie nicht weiters dargestellt, besteht natürlich auch die Möglichkeit, daß die Verstellvorrichtung 48 auch durch den Antrieb 41 für die Hub- bzw. Senkbewegung der Plattform 40 gebildet wird und durch entsprechendes Vorsehen von Mittel, wie beispielsweise stempelartige Stützelemente, zwischen dem Tragrahmen 29 und dem Lastaufnahmemittel 12 die Fahrwerke 30 außer Eingriff von der Höhenführungsbahn 32 verbracht werden können.

Gemäß den vorhergehenden Ausführungen sind die Höhenführungsorgane 31 bzw. die Führungsrollen um eine horizontale Achse verdrehbeweglich und bewegungsfest mit dem Tragrahmen 29 des Transportwagens 21 verbunden. Anderenfalls ist es auch möglich, wie dies jedoch nicht weiters dargestellt ist, daß die Fahrwerke 30 oder zumindest einzelne Höhenführungsorgane 31 relativ in zur Transportebene 35 senkrechter Richtung verstellbar ausgebildet sind und eine Antriebswelle für das oder die Antriebsorgane 31 beispielsweise über eine Kardanwellengelenkachse oder Kardanwellengelenkswelle mit dem Tragrahmen 29 gelenkig verbunden ist bzw. sind. Dabei ist eine Verstellvorrichtung 48 zwischen den Höhenführungsorganen 31 und einem Tragrahmen 29 des Transportwagens 21 angeordnet.

Die Verstellvorrichtung 48 ist zumindest einzelnen Höhenführungsorganen 31 auf einer Seite des Transportwagens 21 oder jeweils einem Paar von in einer gleichen Querschnittsebene durch senkrecht zur Längsrichtung des Transportwagens 21 angeordneten Höhenführungsorganen 21 zugeordnet. Auf diese Art und Weise ist eine einfache Variation der Anzahl der angetriebenen Höhenführungsorgane 31 des Transportwagens 21 und Anpassung an unterschiedliche Typen von zu transportierenden Lastenträgern 16 möglich.

Eine andere, nicht weiters dargestellte Ausführung besteht darin, daß die Führungsbahn 23 bzw. Führungsbahnen 23 senkrecht zur Transportebene 35 verstellbar gegenüber einem Tragrahmen 36 des Lastaufnahmemittels 12 angeordnet ist bzw. sind und die Verstellvorrichtung 48 zwischen der Führungsbahn 23 bzw. den Führungsbahnen 23 und dem Tragrahmen 29 des Transportwagens 21 angeordnet ist.

Wie in den Fig. 6 und 7 in strichpunktierten Linien schematisch dargestellt, besteht auch die Möglichkeit, daß am Lastaufnahmemittel 12 in zur Transportebene 35 abgewandter Richtung vorragende und den Abstützflächen 49 zugeordnete Tragarme 59 zur Positionierung bzw. Halterung des Transportwagens 21 bevorzugt in einer voreinstellbaren Position und/oder Ruhestellung ortsfest angeordnet sind. Gegebenenfalls können diese Tragarme 59 mit relativ zum Lastaufnahmemittel 12 ausfahrbaren Abstützelementen zum Anheben des Lastenträgers 16 gegenüber dem Lastaufnahmemittel 12 bzw. den Führungsbahnen 23 versehen werden.

Wie weiters in der Fig. 6 eingetragen, ist eine minimale Spurweite 60 zwischen den in beabstandeten parallelen Reihen angeordneten Höhenführungsorganen 31 zumindest geringfügig größer bemessen als eine minimale lichte Weite 61 zwischen zwei benachbarten Längsholmen 50 des Lastenträgers 16 und ist die maximale Spurweite 60 kleiner bemessen als eine maximale lichte Weite 61. Ein in der Förderstellung zwischen der Plattform 40 und einer Unterseite 62 des Lastenträgers ausgebildeter Freiraum ermöglicht eine sichere Antriebsverbindung zwischen den Höhenführungsorganen 31 und dem Lastenträger 16.

Wie nicht weiters dargestellt, kann der Transportwagen 21 eine eigene Energieversorgungseinheit, insbesondere eine aufladbare Batterie, oder eine elektrische und/oder mechanische Kupplungsvorrichtung aufweisen. In einer vorbestimmbaren Warteposition des Transportwagens 21 am Lastaufnahmemittel 12 sind die Kupplungsvorrichtung und eine Versorgungseinrichtung miteinander gekuppelt und Energie und/oder Steuersignale wird bzw. werden auf berührendem Wege an den Transportwagens 21 übergeleitet. Die Versorgungseinrichtung umfaßt Wirbelfelder oder andere sichtbare und/oder unsichtbare Energiefelder, wie beispielsweise Licht-, Magnetfelder oder dgl. oder z.B. photoelektrische Elemente. Bevorzugt werden die Energie und/oder die Daten und/oder die Signale über eine zwischen dem Förderfahrzeug 8 und dem Transportwagen 21 angeordnete Verbindungsleitung übertragen.

Es sei darauf hingewiesen, daß die Höhenführungsorgane 31 und/oder die Seitenführungsorgane 33 des Transportwagens 21 durch Elastomere, vorzugsweise Thermoplaste, oder aus Stahl mit einer diese umgebenden Kunststoffummantelung gebildet sind und im Zusammenwirken mit der Palette 17 aus Holzwerkstoff ein hoher Reibschlußbeiwert zwischen diesen erreicht werden kann und dadurch hohe Umfangsgeschwindigkeiten bzw. Vorschubgeschwindigkeiten ausgeführt werden können.

Weiters sei noch erwähnt, daß es natürlich auch möglich ist, daß ein Tragrahmen 29 des Transportwagens 21 mehrere über eine Verstellvorrichtung 48 heb- bzw. senkbare Plattformen 40 aufweist, wobei den Plattformen 40 eine Palette 17 zugeordnet ist.

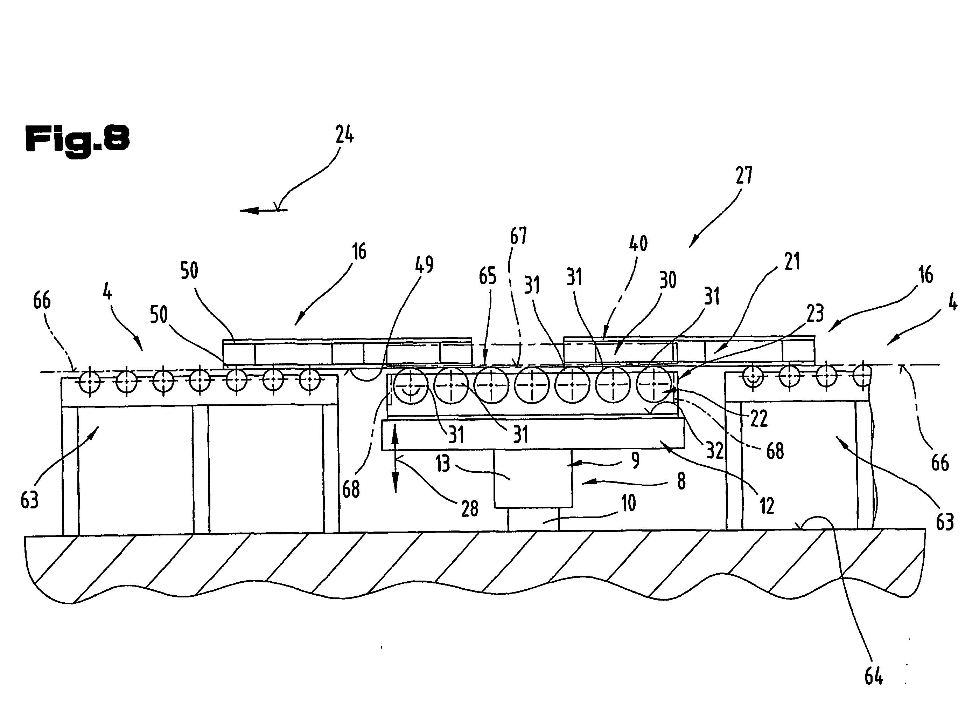

In der Fig. 8 ist eine beispielhafte Ausführung des Übergabe- bzw. Übernahmebereiches 27 zwischen zwei zumindest um den Regalgang voneinander distanziert angeordneten Förderabschnitten 4 und dem vom Förderfahrzeug 8 transportierten Transportwagen 21 in Seitenansicht und in stark vereinfachter schematischer Darstellung gezeigt. Die Förderabschnitte 4 sind im vorliegenden Ausführungsbeispiel durch eine Fördervorrichtung 63, insbesondere Rollenförderer, gebildet. Das Förderfahrzeug 8 weist das in Richtung der Höhe des Mastes 13 - gemäß Doppelpfeil 28 - verfahrbare Lastaufnahmemittel 12 auf. Zweckmäßig ist das Förderfahrzeug 8 durch das Regalbediengerät 9, wie bereits oben beschrieben, gebildet und ist entlang einer auf einer Aufstandsfläche 64 abgestützten Fahrschiene 10 in Gassenrichtung verfahrbar. Gemäß diesem Ausführungsbeispiel befinden sich am Lastaufnahmemittel 12 die zwei nebeneinanderliegenden Transportwagen 21 in ihren Förderstellungen, wo sich die Höhenführungsorgane 31 der Fahrwerke 30 außer Eingriff befinden und von den Höhenführungsbahnen 32 der Führungsbahn 23 abgehoben sind. Die Plattformen 40 der Transportwagen 21, wie diese in der Fig. 8 durch strichpunktierte Linien dargestellt sind, sind in der Förderstellung parallel zueinander und parallel zur Transportebene des Lastaufnahmemittels 12 verlaufend ausgerichtet und zwischen den Längsholmen 50 positioniert. In dieser Förderstellung stehen die an den Längsseiten des Transportwagens 21 angeordneten, zumindest zum Teil antreibbaren Höhenführungsorgane 31 mit zumindest einem Lastenträger 16 in Antriebsverbindung. Wie bereits beschrieben, sind die Höhenführungsorgane 31 über einen nicht weiters dargestellten Fahrantrieb zumindest während des Weiterleitens und/oder Übergebens eines ersten bzw. weiteren Lastenträgers 16 vom Transportwagen 21 mit den Förderabschnitten 4 antriebsverbunden. Infolge der Drehbewegung bzw. Antriebsverbindung der Höhenführungsorgane 31 mit zwei Lastenträgern 16 (wie in dieser Fig. dargestellt ist) wird der erste Lastenträger 16 vom Transportwagen 21 gemäß dem Pfeil 24 in Richtung seiner Länge 18 auf den dem Förderfahrzeug 8 nachgelagerten weiteren Förderabschnitt 4, insbesondere Abförderlinie, abgeschoben und gleichzeitig ein weiterer Lastenträger 16 von dem dem Förderfahrzeug 8 vorgelagerten ersten Förderabschnitt 4, insbesondere Zuförderlinie, am Transportwagen 21 aufgeschoben. Daher können mehrere taktweise aufeinanderfolgend und zumindest in einem geringen Abstand voneinander verfahrbare Lastenträger 16 über den Transportwagen 21 gefördert werden, wodurch sich insbesondere im Übergabe- bzw. Übernahmebereich 27 ein erheblicher Spielzeitgewinn ergibt und im weiteren Sinne eine Anhebung der Umschlagleistung zwischen mehreren Förderabschnitten 4 gegeben ist.

Wie dargestellt, können die Rollen des Rollenförderers des nachgeordneten weiteren Förderabschnittes 4 angetrieben oder unangetrieben werden, so daß im zweiteren Fall infolge der Fahrbewegung - gemäß Pfeil 24 - des Lastenträgers 16 auf den Rollenförderer dieser abgeschoben wird und die unangetriebenen Rollen desselben in eine Verdrehungsbewegung versetzt werden. Die Rollen des Rollenförderers des ersten Förderabschnittes 4 sind bevorzugt angetrieben, wobei eine Vorschubgeschwindigkeit des ersten Förderabschnittes 4 gleichsinnig und synchron zur Vorschubgeschwindigkeit der Höhenführungsorgane 31 ist.

Die an der Längsseite des Transportwagens 21 hintereinander angeordneten Reihen von Höhenführungsorgane 31 bilden in der Förderstellung je eine Förderbahn 65 für zumindest einen Lastenträger 16 aus. Eine Förderebene 66 von unmittelbar zum Transportwagen 21 benachbarten Fördervorrichtungen 63 verlaufen fluchtend zu einer die Förderbahnen 65 des Transportwagens 21 aufnehmende Förderebene 67. In der Förderstellung der Transportwagen 21, wie in dieser Figur dargestellt ist, verläuft eine, die angehobenen Höhenführungsorgane 31 aufnehmende Führungsebene 67 für den Lastenträger 16 parallel zu einer horizontalen Förderebene der den Lastenträger 16 empfangenden oder abgebenden Förderabschnitte 4 fluchtend zueinander.

Dem Fahrantrieb des Transportwagens 21 und/oder Antrieben der unmittelbar benachbarten Fördervorrichtungen 63 ist eine gemeinsame Steuervorrichtung mit im Bereich des Transportwagens 21 und/oder der Fördervorrichtungen 63 angeordneten Sensoren 68, insbesondere Endschaltern, zugeordnet, wobei durch Aktivierung des Sensors 68 zwischen den Förderbahnen 65 und der unmittelbar anschließenden Fördervorrichtung 63 durch einen ersten Lastenträger 16 der Antrieb der weiteren Fördervorrichtung 63 zur Übergabe eines Lastenträgers 16 an den Transportwagen 21 sofort oder nach Verlassen der Förderbahn 65 durch den ersten Lastenträger 16 aktiviert wird.

Nach dem Abschieben auf den weiteren Förderabschnitt 4 oder Aufnehmen aus den ersten Förderabschnitt 4 des Lastenträgers 16 werden, wie bereits in der Fig. 7 erläutert ist, die Höhenführungsorgane 31 abgesenkt und liegen diese an den Höhenführungsbahnen 32 des Profiles 22 am Lastaufnahmemittel 12 abrollbar auf. Danach verfährt das Förderfahrzeug 8 in einen weiteren Übergabe- bzw. Übernahmebereich 27 oder wird dieses zum Ein- oder Auslagern einer Palette 17 in dem Regallager 7 zu diesem positioniert.

Natürlich kann die Vorschubgeschwindigkeit des Fahrantriebes zum Bewegen von mehreren Lastenträgern 16 sowohl beim Abschieben als auch beim Aufschieben gleich oder unterschiedlich hoch sein.

Der Ordnung halber sei abschließend darauf hingewiesen, daß zum besseren Verständnis des Aufbaus des Förderfahrzeuges und Transportwagens diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2; 3, 4, 5; 6, 7; 8 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Kommissionieranlage
- 2: Förderabschnitt
- 3: Förderabschnitt
- 4: Förderabschnitt
- 5: Förderabschnitt

- 6: Förderabschnitt
- 7: Regallager
- 8: Förderfahrzeug
- 9: Regalbediengerät
- 10: Fahrschiene

- 11: Doppelpfeil
- 12: Lastaufnahmemittel
- 13: Mast
- 14: Etage
- 15: Regalplatz

- 16: Lastenträger
- 17: Palette
- 18: Länge
- 19: Breite
- 20: Tiefe

- 21: Transportwagen
- 22: Profil
- 23: Führungsbahn
- 24: Doppelpfeil
- 25: Voizonenbereich

- 26: Bereitstellungsposition
- 27: Übergabe- bzw. Übernahmebereich
- 28: Doppelpfeil
- 29: Tragrahmen
- 30: Fahrwerk

- 31: Höhenführungsorgan
- 32: Höhenführungsbahn
- 33: Seitenführungsorgan
- 34: Seitenführungsbahn
- 35: Transportebene

- 36: Tragrahmen
- 37: Schenkel
- 38: Schenkel
- 39: Fahrantrieb
- 40: Plattform

- 41: Antrieb
- 42: Anhebevorrichtung
- 43: Übertragungselement
- 43': Übertragungselement
- 44: Übertragungselement
- 44': Übertragungselement
- 45: Antriebsflansch

- 46: Gelenk
- 46': Gelenk
- 47: Stellhebel
- 47': Stellhebel
- 48: Verstellvorrichtung
- 49: Abstützfläche
- 50: Längsholm

- 51: Mitnahmeorgan
- 52: Doppelpfeil
- 53: Motor
- 54: Schubkurbeltriebwerk
- 55: Schubstange
- 55': Schubstange

- 56: Gelenk
- 56': Gelenk
- 57: Hubelement
- 57': Hubelement
- 58: Hubtisch
- 59: Tragarm
- 60: Spurweite

- 61: Weite
- 62: Unterseite
- 63: Fördervorrichtung
- 64: Aufstandsfläche
- 65: Förderbahn

- 66: Führungsebene
- 67: Führungsebene
- 68: Sensor

## Patentansprüche

1. Förderfahrzeug (8), insbesondere Regalbediengerät (9), mit einem Lastaufnahmemittel (12) zur Aufnahme eines Transportwagens (21), der eine Plattform (40) zur bedarfsweisen Aufnahme eines Lastenträgers (16), insbesondere einer Palette (17), aufweist und der zur Abstellung oder Aufnahme des Lastenträgers (16) mit Fahrwerken (30) mit Höhenführungsorganen (31) versehen ist und die Höhenführungsorgane (31) entlang von zumindest am Lastaufnahmemittel (12) in einer etwa senkrecht zur Höhen- und/oder Seitenführungsbahn des Lastaufnahmemittels (12) verlaufenden Transportebene (35) angeordneten Höhenführungsbahnen (32) verfahrbar und mit wenigstens einem Fahrantrieb (39) für die vom Lastaufnahmemittel (12) losgelöste Fahrbewegung verbunden sind und die Plattform (40) mit einem Antrieb (41) für eine Hub- bzw. Senkbewegung relativ zu den Fahrwerken (30) in etwa senkrecht zur Transportebene (35) verbunden ist, **dadurch gekennzeichnet, daß** den Höhenführungsorganen (31) wenigstens eine Verstellvorrichtung (48) zugeordnet ist, die eine erste Ruhestellung aufweist, in der die Höhenführungsorgane (31) des Transportwagens (21) auf den Höhenführungsbahnen (32) abgestützt sind und zumindest eine weitere Förderstellung aufweist, in der die Höhenführungsorgane (31) außer Eingriff mit den Höhenführungsbahnen (32) sind und die Höhenführungsorgane (31) bedarfsweise zumindest einen Lastenträger (16) über den Fahrantrieb (39) verschiebbar lagern bzw. abstützen.

2. Förderfahrzeug nach Anspruch 1, **dadurch gekennzeichnet, daß** die Verstellvorrichtung (48) am Lastaufnahmemittel (12) für den Transportwagen (21) angeordnet ist und Mitnahmeorgane (51) zur Verbindung mit den Transportwagen (21) sowie eine in etwa senkrecht zur Transportebene (35) verlaufende Hubrichtung (52) aufweist.

3. Förderfahrzeug nach Anspruch 1 oder 2, **dadurch gekennzeichnet, daß** die Verstellvorrichtung (48) zwischen den Höhenführungsorganen (31) und einem Tragrahmen (29) des Transportwagens (21) angeordnet ist und eine in etwa senkrecht zur Transportebene (35) verlaufende Hubrichtung (52) aufweist.

4. Förderfahrzeug nach einem oder mehreren der vorhergehenden Ansprüche, **dadurch gekennzeichnet, daß** die Verstellvorrichtung (48) zumindest einzelnen der Höhenführungsorgane (31) auf einer Längsseite des Transportwagens (21) zugeordnet ist.

5. Förderfahrzeug nach einem oder mehreren der vorhergehenden Ansprüche, **dadurch gekennzeichnet, daß** die Verstellvorrichtung (48) jeweils einem Paar von in einer gleichen Querschnittsebene senkrecht zur Längsrichtung des Transportwagens (21) angeordneten Höhenführungsorganen (31) zugeordnet ist.

6. Förderfahrzeug nach einem oder mehreren der vorhergehenden Ansprüche, **dadurch gekennzeichnet, daß** die Höhenführungsbahnen (32) von profilartigen Führungsbahnen (23) ausgebildet sind und die Führungsbahnen (23) senkrecht zur Transportebene (35) verstellbar gegenüber einem Tragrahmen des Lastaufnahmemittels (12) angeordnet sind und die Verstellvorrichtung (48) zwischen den Führungsbahnen (23) und dem Tragrahmen des Lastaufnahmemittels (12) angeordnet ist.

7. Förderfahrzeug nach einem oder mehreren der vorhergehenden Ansprüche, **dadurch gekennzeichnet, daß** am Lastaufnahmemittel (12) Tragarme (59) zur Halterung des Transportwagens (21) bevorzugt in einer voreinstellbaren Position oder in der Förderstellung ortsfest angeordnet sind.

8. Förderfahrzeug nach einem oder mehreren der vorhergehenden Ansprüche, **dadurch gekennzeichnet, daß** die Tragarme (59) für den Transportwagen (21) am Lastaufnahmemittel (12) in senkrecht zur Transportebene (35) verlaufender Richtung verstellbar angeordnet sind und zwischen diesen und dem Lastaufnahmemittel (12) die Verstellvorrichtung (48) angeordnet ist.

9. Förderfahrzeug nach einem oder mehreren der vorhergehenden Ansprüche, **dadurch gekennzeichnet, daß** die nebeneinander im Abstand angeordneten Höhenführungsorgane (31) in ihrer Förderstellung Förderbahnen (65) für den Lastenträger (16) ausbilden und daß eine Förderebene (66) von jeder der beiden Stirnseiten von Förderbahnen (65) des Transportwagens (21) unmittelbar nachgeordneten Fördervorrichtungen (63) mit einer Förderebene (67) der in Förderstellung befindlichen Förderbahnen (65) fluchtet.

10. Förderfahrzeug nach einem oder mehreren der vorhergehenden Ansprüche, **dadurch gekennzeichnet, daß** die Förderebenen (66, 67) geneigt zu einer Horizontalebene verlaufen.

11. Förderfahrzeug nach einem oder mehreren der vorhergehenden Ansprüche, **dadurch gekennzeichnet, daß** der Fahrantrieb (39) für die Höhenführungsorgane (31) des Transportwagens (21) zum gleichzeitigen Bewegen eines ein- und eines auslaufenden Lastenträgers (16) ausgebildet ist.

12. Förderfahrzeug nach einem oder mehreren der vorhergehenden Ansprüche, **dadurch gekennzeichnet, daß** die Verstellvorrichtung (48) einen Hubtisch (58) aufweist, der gegenüber dem Lastaufnahmemittel (12) über ein mit einem Motor (53) vorzugsweise antreibbares Schubkurbeltriebwerk (54) mit kniehebelartigen Schubstangen (55, 55') relativ in zur Transportebene (35) etwa senkrechter Richtung verstellbar ausgebildet ist.

13. Förderfahrzeug nach Anspruch 12, **dadurch gekennzeichnet, daß** die Schubstangen (55, 55') mit um parallel zu der Transportebene (35) und zu dieser in Richtung zum Lastaufnahmemittel (12) versetzt verlaufenden Achsen exzentrisch gelagerten Hubelementen (57, 57') antriebsverbunden sind.

14. Förderfahrzeug nach Anspruch 12 oder 13, **dadurch gekennzeichnet, daß** der den Transportwagen (21) in seiner angehobenen Förderstellung abstützende Hubtisch (58) des Schubkurbeltriebwerkes (54) zur Umsetzung einer linearen Schubbewegung der Schubstangen (55, 55') in eine Hub- bzw. Senkbewegung des Hubtisches (58) mit den Hubelementen (57, 57') bewegungsverbunden sind.

15. Förderfahrzeug nach einem oder mehreren der vorhergehenden Ansprüche, **dadurch gekennzeichnet, daß** die Verstellvorrichtung (48) einen Hubtisch (58) aufweist, der an seinen gegenüberliegenden Längsseiten mit je einem endlos umlaufenden Antriebsorgan, wie Riemen, Kette, ausgestattet ist.

16. Förderfahrzeug nach einem oder mehreren der vorhergehenden Ansprüche, **dadurch gekennzeichnet, daß** die Verstellvorrichtung (48) durch den Antrieb (41) für die Hub- bzw. Senkbewegung der Plattform (40) gebildet ist.

17. Förderfahrzeug nach einem oder mehreren der vorhergehenden Ansprüche, **dadurch gekennzeichnet, daß** der Fahrantrieb (39) und/oder der Antrieb (41) für die Hub- bzw. Senkbewegung und/oder die Verstellvorrichtung (48) durch einen druckmittelbeaufschlagten Stellantrieb, wie Pneumatik- oder Hydraulikantrieb, gebildet ist und der Hubtisch (58) über den Stellantrieb relativ zum Lastaufnahmemittel (12) verstellbar ist.

18. Förderfahrzeug nach einem oder mehreren der vorhergehenden Ansprüche, **dadurch gekennzeichnet, daß** der Fahrantrieb (39) und/oder der Antrieb (41) für die Hub- bzw. Senkbewegung und/oder die Verstellvorrichtung (48) durch einen elektrisch betätigbaren Stellantrieb gebildet ist und der Hubtisch (58) über den Stellantrieb relativ zum Lastaufnahmemittel (12) verstellbar ist.

19. Förderfahrzeug nach einem oder mehreren der vorhergehenden Ansprüche, **dadurch gekennzeichnet, daß** der Transportwagen (21) und der Lastträger (16) zumindest in der angehobenen Förderstellung des Transportwagens (21) in und quer zur Richtung der Fahrbewegung (24) desselben zueinander positioniert sind.

20. Förderfahrzeug nach einem oder mehreren der vorhergehenden Ansprüche, **dadurch gekennzeichnet, daß** die Plattform (40) mit einer Längsführungsbahn zur Seitenführung des Lastenträgers (16) insbesondere während des Überschiebens desselben von der Plattform (40) in einen von mehreren zu dieser benachbarten Förderabschnitten (3; 4; 5; 6) aufweist.

21. Förderfahrzeug nach einem oder mehreren der vorhergehenden Ansprüche, **dadurch gekennzeichnet, daß** eine Längserstreckung des Lastenträgers (16), insbesondere der Palette (17), in Richtung der Fahrbewegung (24) des Transportwagens (21) ausgerichtet ist und eine Längserstreckung des Transportwagens (21) parallel zum Lastenträgers (16) und quer zur Gassenrichtung (11) des Förderfahrzeuges (8) verläuft.

22. Förderfahrzeug nach einem oder mehreren der vorhergehenden Ansprüche, **dadurch gekennzeichnet, daß** in der abgesenkten Ruhestellung der Verstellvorrichtung (48) sich über eine Länge (18) des Lastenträgers (16) distanziert voneinander erstreckende Längsholme (50) mit ihren von einer Ladefläche abgewandten und zu dieser distanzierten Abstützflächen (49) am Lastaufnahmemittel (12) abstützen.

23. Förderfahrzeug nach einem oder mehreren der vorhergehenden Ansprüche, **dadurch gekennzeichnet, daß** sich zwischen der Ladefläche und Längsholmen (50) Abstandhalter erstrecken, die quer zur Fahrbewegung (24) des Transportwagens (21) in einem Abstand und parallel zueinander verlaufen.

24. Förderfahrzeug nach einem oder mehreren der vorhergehenden Ansprüche, **dadurch gekennzeichnet, daß** eine minimale Spurweite (60) zwischen den in beabstandeten Reihen angeordneten Höhenführungsorganen (31) zumindest geringfügig größer bemessen ist als eine minimale lichte Weite (61) zwischen zwei benachbarten Längsholmen (50) und die maximale Spurbreite (60) kleiner bemessen ist als eine maximale lichte Weite (61).

25. Förderfahrzeug nach einem oder mehreren der vorhergehenden Ansprüche, **dadurch gekennzeichnet, daß** die zwischen zwei benachbarten Längsholmen (50) positionierbare Plattform (40) in der weiteren angehobenen Förderstellung zumindest geringfügig von einer Unterseite (62) des Lastenträgers (16) distanziert ist und die Abstützflächen (49) der Längsholme (50) auf den Höhenführungsorganen (31) aufgesetzt sind.

26. Förderfahrzeug nach einem oder mehreren der vorhergehenden Ansprüche, **dadurch gekennzeichnet, daß** am Lastaufnahmemittel (12) mehrere, bevorzugt zwei über Höhen- und Seitenführungsorgane (31, 33) entlang von an diesem angeordneten Höhen- und Seitenführungsbahnen (32, 34) verfahrbare und synchron ansteuerbare, insbesondere über eine Wegegleichlaufregelung, Transportwagen (21) angeordnet sind und diese zumindest einen oder mehrere in Richtung der Fahrbewegung (24) des Transportwagens (21) hintereinander anordenbare Lastenträger (16) aufnehmen.

27. Förderfahrzeug nach einem oder mehreren der vorhergehenden Ansprüche, **dadurch gekennzeichnet, daß** die quer zur Gassenrichtung (11) des Förderfahrzeuges (8) zumindest um die Spurweite (60) distanziert und parallel zueinander verlaufenden ortsfesten Führungsbahnen (23) am Lastaufnahmemittel (12) durch winkelartige Profile (22) gebildet sind und horizontale Schenkel (37) die Höhenführungsbahnen (32) für die Höhenführungsorgane (31) bzw. diese bildende Führungsrollen und die aufragenden Schenkel (38) die Seitenführungsbahnen (34) für die Seitenführungsorgane (33) bzw. diese bildende Führungsrollen bilden.

28. Förderfahrzeug nach einem oder mehreren der vorhergehenden Ansprüche, **dadurch gekennzeichnet, daß** die Abstützflächen (49) des Lastenträgers (16) in der abgesenkten Ruhestellung des Transportwagens (21) an Teilflächen der Führungsbahnen (23), insbesondere den aufragenden Schenkeln (37), zumindest bereichsweise abgestützt sind.

29. Förderfahrzeug nach einem oder mehreren der vorhergehenden Ansprüche, **dadurch gekennzeichnet, daß** der Hubtisch (58) in seiner angehobenen Förderstellung mit dem Transportwagen (21) über gegeneinander positionierende Einrichtungen und den Mitnahmeorganen (51), wie Kupplungsstifte, lösbar verbunden ist.

30. Förderfahrzeug nach einem oder mehreren der vorhergehenden Ansprüche, **dadurch gekennzeichnet, daß** der Transportwagen (21) eine eigene Energieversorgungseinheit, insbesondere eine aufladbare Batterie, aufweist.

31. Förderfahrzeug nach einem oder mehreren der vorhergehenden Ansprüche, **dadurch gekennzeichnet, daß** der Transportwagen (21) eine elektrische und/oder mechanische Kupplungsvorrichtung aufweist und daß in einer vorbestimmbaren Warteposition des Transportwagens (21) am Lastaufnahmemittel (12) die Kupplungsvorrichtung und eine Versorgungseinrichtung zur Übertragung von Energie und/oder Steuersignalen wirkungsverbunden, insbesondere eingesteckt, sind.

32. Förderfahrzeug nach einem oder mehreren der vorhergehenden Ansprüche, **dadurch gekennzeichnet, daß** die Versorgungseinrichtung Wirbelfelder oder andere sichtbare oder unsichtbare Energiefelder, wie beispielsweise Licht-, Magnetfelder oder dgl., aufweist und z.B. photoelektrische Elemente umfaßt.

33. Förderfahrzeug nach einem oder mehreren der vorhergehenden Ansprüche, **dadurch gekennzeichnet, daß** der Transportwagen (21), insbesondere der Fahrantrieb (39), Antrieb (41) für die Hub- und Senkbewegung, Steuereinrichtung, über eine Daten und/oder Signale und/oder Energie übertragende Verbindungsleitung mit einer am Förderfahrzeug (8) angeordneten Versorgungseinheit und Steuereinheit verbunden ist.

34. Förderfahrzeug nach einem oder mehreren der vorhergehenden Ansprüche, **dadurch gekennzeichnet, daß** die Höhenführungsorgane (31) des Transportwagens (21) durch Elastomere, vorzugsweise Thermoplaste, oder aus Stahl mit einer diese umgebenden Kunststoffummantelung gebildet sind.

35. Verfahren zum Ein- und/oder Auslagern von Lastenträgern (16), insbesondere Paletten (17), in einem Regallager (7) mit einem Förderfahrzeug (8), insbesondere einem Regalbediengerät (9), nach Anspruch 1, auf welchem ein Lastaufnahmemittel (12) der Höhe nach verstellbar ist und auf dem Lastaufnahmemittel (12) ein Transportwagen (21) entlang zumindest einer Führungsbahn (23) verfahren wird, mit welchem zumindest ein Lastenträger (16) aufgenommen und transportiert wird, wobei der Transportwagen (21) über Höhenführungsorgane (31), insbesondere Führungsrollen, auf der zumindest einen Führungsbahn (23) geführt ist, **dadurch gekennzeichnet, daß** die Höhenführungsorgane (31) wahlweise auf der Führungsbahn (23) zur Relativverstellung gegenüber dem Lastaufnahmemittel (12) abrollen oder bei am Lastaufnahmemittel (12) fixierter Position des Transportwagens (21) den Lastenträger (16) abstützen, wobei zur Verschiebung des Lastenträgers (16) relativ zum Transportwagen (21) oder zur Führungsbahn (23) die Höhenführungsorgane (31) mit einer Vorschubbewegung des Fahrantriebes (39) beaufschlagt werden.

36. Verfahren nach Anspruch 35, **dadurch gekennzeichnet, daß** der Transportwagen (21) zwischen zwei an die Führungsbahn (23) stirnseitig unmittelbar anschließenden Fördervorrichtungen (63) positioniert wird, worauf die Höhenführungsorgane (31) des Transportwagens (21) in eine Förderstellung zum Eingriff mit mehreren Lastenträgern (16) bewegt werden und danach der erste Lastenträger (16) über den Fahrantrieb (39) der Höhenführungsorgane (31) in Richtung einer der unmittelbar nachfolgenden Fördervorrichtungen (63) bewegt wird.

37. Verfahren nach Anspruch 35 oder 36, **dadurch gekennzeichnet, daß** gleichzeitig oder unmittelbar nach Beaufschlagung des auf den Transportwagen (21) befindlichen Lastenträgers (16) mit dem Fahrantrieb (39) in Fahrbewegungsrichtung ein weiterer Lastenträger (16) von der der gegenüberliegenden Stirnseite unmittelbar benachbarten Fördervorrichtung (63) auf den Transportwagen (21) zubewegt wird.

38. Verfahren nach einem der Ansprüche 35 bis 37, **dadurch gekennzeichnet, daß** nachdem der vom Transportwagen (21) abzuschiebende Lastenträger (16) die Höhenführungsorgane (31) des Transportwagens (21) verlassen oder nahezu verlassen hat, von der der weiteren Stirnseite der Höhenführungsorgane (31) nachgeordneten Fördervorrichtung (63) ein Lastenträger (16) auf den Transportwagen (21) aufgeschoben wird.

39. Verfahren nach einem der Ansprüche 35 bis 38, **dadurch gekennzeichnet, daß** die Vorschubgeschwindigkeit des Fahrantriebes (39) bzw. der Höhenführungsorgane (31) sowohl beim Abschieben als auch beim Aufschieben von mehreren Lastenträgern (16) gleich hoch ist.

40. Verfahren nach einem der Ansprüche 35 bis 39, **dadurch gekennzeichnet, daß** die Vorschubgeschwindigkeit des Fahrantriebes (39) bzw. der Höhenführungsorgane (31) beim Aufnehmen oder Abschieben eines Lastenträgers (16) höher ist.

41. Verfahren nach Anspruch 35 oder 36, **dadurch gekennzeichnet, daß** dem Fahrantrieb (39) des Transportwagens (21) und/oder Antrieben der unmittelbar benachbarten Fördervorrichtungen (63) eine gemeinsame Steuervorrichtung mit im Bereich des Transportwagens (21) und/oder der Fördervorrichtungen (63) angeordneten Sensoren (68) zugeordnet ist und bei Aktivierung des Sensors (68) zwischen der Förderbahn (23) und der unmittelbar anschließenden Fördervorrichtung (63) durch einen ersten Lastenträger (16) der Antrieb der weiteren Fördervorrichtung (63) zur Übergabe eines Lastenträgers (16) an den Transportwagen (21) sofort oder nach Verlassen der Förderbahn (23) durch den ersten Lastenträger (16) aktiviert wird.

## Claims

1. Conveyor trolley (8), in particular a shelf stacking device (9), with a load-bearing means (12) to accommodate a trolley (21) having a platform (40) for receiving a load-bearing unit (16), in particular a pallet (17), as and when necessary, which is equipped with bogie assemblies (30) with height guide elements (31) for setting down or picking up the load bearing unit (16), and the height guide elements (31) are displaceable at least along guide tracks (32) on the load-bearing means (12) in a transport plane (35) extending substantially perpendicular to the height and/or lateral guide track of the load-bearing means (12) and are linked to at least one displacement drive (39) for initiating the displacement motion of the load-bearing means (12), and the platform (40) is linked to a drive (41) which effects a lifting and lowering motion relative to the bogie assemblies (30) substantially perpendicular to the transport plane (35), **characterised in that** the height guide elements (31) co-operate with at least one displacement mechanism (48), which has a first non-operating position in which the height guide elements (31) of the trolley (21) are supported on the height guide tracks (32), and at least one other conveying position, in which the height guide elements (31) are disengaged from the height guide tracks (32), and the height guide elements (31) displaceably bear and support at least one load-bearing unit (16) by means of the displacement drive (39) as and when necessary.

2. Conveyor trolley as claimed in claim 1, **characterised in that** the displacement mechanism (48) for the trolley (21) is disposed on the load-bearing means (12) and has driver elements (51) in order to connect with the trolley (21), and a lifting direction (52) extends substantially perpendicular to the transport plane (35).

3. Conveyor trolley as claimed in claim 1 or 2, **characterised in that** the displacement mechanism (48) is disposed between the height guide elements (31) and a support frame (29) of the trolley (21) and has a lifting direction (52) extending substantially perpendicular to the transport plane (35).

4. Conveyor trolley as claimed in one or more of the preceding claims, **characterised in that** the displacement mechanism (48) co-operates with at least individual ones of the height guide elements (31) on a longitudinal side of the trolley (21).

5. Conveyor trolley as claimed in one or more of the preceding claims, **characterised in that** the displacement mechanism (48) co-operates respectively with a pair of height guide elements (31) in a same cross-sectional plane perpendicular to the longitudinal direction of the trolley (21).

6. Conveyor trolley as claimed in one or more of the preceding claims, **characterised in that** the height guide tracks (32) are provided in the form of section-type guide tracks (23) and the guide tracks (23) are displaceable perpendicular to a transport plane (35) relative to a support frame of the load-bearing means (12), and the displacement mechanism (48) is disposed between the guide tracks (23) and the support frame of the load-bearing means (12).

7. Conveyor trolley as claimed in one or more of the preceding claims, **characterised in that** fixed support arms (59) are provided on the load-bearing means (12) in order to retain the trolley (21), preferably in a pre-definable position or in the conveying position.

8. Conveyor trolley as claimed in one or more of the preceding claims, **characterised in that** the support arms (59) for the trolley (21) are disposed on the load-bearing means (12) so as to be displaceable in the direction extending perpendicular to the transport plane (35), and the displacement mechanism (48) is disposed between the latter and the load-bearing means (12).

9. Conveyor trolley as claimed in one or more of the preceding claims, **characterised in that** the adjacent height guide elements (31) spaced at a distance apart constitute conveyor tracks (65) for the load-bearing unit (16) in their conveying position, and a conveyor plane (66) of each of the two terminal ends of conveyor tracks (65) of the trolley (21) of immediately adjacent conveyor mechanisms (63) extends flush with a conveyor plane (67) of the conveyor tracks (65) when in the conveying position.

10. Conveyor trolley as claimed in one or more of the preceding claims, **characterised in that** the conveyor planes (66, 67) are inclined at an angle to a horizontal plane.

11. Conveyor trolley as claimed in one or more of the preceding claims, **characterised in that** the displacement drive (39) for the height guide element (31) of the trolley (21) is designed simultaneously to move an incoming and an outgoing load-bearing unit (16).

12. Conveyor trolley as claimed in one or more of the preceding claims, **characterised in that** the displacement mechanism (48) has a lifting table (58), which is designed to be displaceable relative to the load-bearing means (12) in a direction perpendicular to the transport plane (35) by means of a crank system (54), which can preferably be driven by means of a motor (53) with toggle-type push rods (55, 55').

13. Conveyor trolley as claimed in claim 12, **characterised in that** the push rods (55, 55') are drivingly linked to lifting elements (57, 57') parallel with the transport plane (35) and mounted about eccentric axes offset therefrom in the direction of the load-bearing means (12).

14. Conveyor trolley as claimed in claim 12 or 13, **characterised in that** the lifting table (58) of the crank system (54) supporting the trolley (21) in its raised conveying position is displacingly linked to the lifting elements (57, 57'), in order to convert a linear pushing motion of the push rods (55, 55') into a lifting and lowering motion of the lifting table (58).

15. Conveyor trolley as claimed in one or more of the preceding claims, **characterised in that** the displacement mechanism (48) has a lifting table (58), each of its oppositely lying longitudinal sides being equipped with an endlessly circulating drive element, such as a belt or chain.

16. Conveyor trolley as claimed in one or more of the preceding claims, **characterised in that** the displacement mechanism (48) is the drive (41) for the lifting and lowering motion of the platform (40).

17. Conveyor trolley as claimed in one or more of the preceding claims, **characterised in that** the displacement drive (39) and/or the drive (41) for producing the lifting and lower motion and/or the displacement mechanism (48) is provided in the form of a pressure-operated actuator, such as a pneumatic or hydraulic drive, and the lifting table (58) is displaceable relative to the load-bearing means (12) by means of the actuator.

18. Conveyor trolley as claimed in one or more of the preceding claims, **characterised in that** the displacement drive (39) and/or the drive (41) for producing the lifting and lowering motion and/or the displacement mechanism (48) is provided in the form of an electrically operated actuator and the lifting table (58) is displaceable relative to the loading-bearing means (12) by means of the actuator.

19. Conveyor trolley as claimed in one or more of the preceding claims, **characterised in that**, at least when the trolley (21) is in the raised conveying position, the trolley (21) and the load-bearing unit (16) are positioned relative to one another in and transversely to the direction of the displacement motion (24) thereof.

20. Conveyor trolley as claimed in one or more of the preceding claims, **characterised in that** the platform (40) has a longitudinal guide track for laterally guiding the load-bearing unit (16), in particular when it is being transferred from the platform (40) to one of several conveyor sections (3; 4; 5; 6) adjacent to it.

21. Conveyor trolley as claimed in one or more of the preceding claims, **characterised in that** a longitudinal extension of the load-bearing unit (16), in particular the pallet (17), is aligned in the direction of the displacement motion (24) of the trolley (21), and a longitudinal extension of the trolley (21) extends parallel with the load-bearing unit (16) and transversely to the aisle direction (11) of the conveyor trolley (8).

22. Conveyor trolley as claimed in one or more of the preceding claims, **characterised in that**, when the displacement drive (48) is in the lowered non-operating position, longitudinal spars (50) running across a length (18) of the load-bearing unit (16) and spaced at a distance apart from one another are supported on the load-bearing means (12) by their support surfaces (49) remote from a loading surface and spaced at a distance apart therefrom.

23. Conveyor trolley as claimed in one or more of the preceding claims, **characterised in that** spacers run between the loading surface and longitudinal spars (50), which run transversely to the displacement motion (24) of the trolley (21), at a distance from and parallel with one another.

24. Conveyor trolley as claimed in one or more of the preceding claims, **characterised in that** a minimum track width (60) between the height guide elements (31) spaced apart in rows is slightly bigger than a minimum clearance width (61) between two adjacent longitudinal spars (50), and the maximum track width (60) is smaller than a maximum clearance width (61).

25. Conveyor trolley as claimed in one or more of the preceding claims, **characterised in that** the platform (40), which can be positioned between two adjacent longitudinal spars (50), is spaced at least slightly apart from a bottom face (62) of the load-bearing unit (16) in the other raised conveying position, and the support surfaces (49) of the longitudinal spars (50) are placed on the height guide elements (31).

26. Conveyor trolley as claimed in one or more of the preceding claims, **characterised in that** several, preferably two trolleys (21) are provided on the load-bearing means (12), which are preferably displaceable by means of height and lateral guide elements (31, 33) along height and lateral guide tracks (32, 34) disposed thereon, and can be activated synchronously, in particular by means of a travel synchroniser control which receives at least one or more load-bearing units (16) which can be sorted one after the other in the direction of the displacement motion (24) of the trolley (21).

27. Conveyor trolley as claimed in one or more of the preceding claims, **characterised in that** the stationary guide tracks (23) on the load-bearing means (12), which extend transversely to the aisle direction (11) of the conveyor trolley (8) and parallel with one another spaced apart by at least the track width (60), are provided in the form of angled sections (22), and horizontal legs (37) constitute the height guide tracks (32) for the height guide elements (31) and the guide rollers forming them, whilst the upright legs (38) constitute the lateral guide tracks (34) for the lateral guide elements (33) and the guide rollers forming them.

28. Conveyor trolley as claimed in one or more of the preceding claims, **characterised in that**, when the trolley (21) is in the lowered non-operating position, at least certain regions of the support surfaces (49) of the load-bearing unit (16) are supported on part-surfaces of the guide tracks (23), in particular the upright legs (37).

29. Conveyor trolley as claimed in one or more of the preceding claims, **characterised in that**, in its raised conveying position, the lifting table (58) is releasably connected to the trolley (21) by means of opposite positioning elements and driver elements (51), such as coupling pins.

30. Conveyor trolley as claimed in one or more of the preceding claims, **characterised in that** the trolley (21) has a separate power supply unit, in particular a rechargeable battery.

31. Conveyor trolley as claimed in one or more of the preceding claims, **characterised in that** the trolley (21) has an electric and/or mechanical clutch mechanism and when the trolley (21) is in a pre-definable stand-by position on the load-bearing means (12), the clutch mechanism and a power supply unit are actively connected, in particular plugged in, in order to transmit energy and/or control signals.

32. Conveyor trolley as claimed in one or more of the preceding claims, **characterised in that** the power supply unit has eddy fields or other visible or invisible energy fields, such as optical, magnetic fields or similar, and incorporates photoelectric elements, for example.

33. Conveyor trolley as claimed in one or more of the preceding claims, **characterised in that** the trolley (21), in particular the displacement drive (39), the drive (41) for producing the lifting and lowering motion and control unit are connected via a connecting line for transmitting data and/or signals and/or power to a supply unit and control unit provided on the conveyor trolley (8).

34. Conveyor trolley as claimed in one or more of the preceding claims, **characterised in that** the height guide elements (31) of the trolley (21) are made from elastomer, preferably a thermoplastic, or from steel encased in plastic.

35. Method of storing and/or retrieving load-bearing means (16), in particular pallets (17), from a racking bay (7) with a conveyor trolley (8), in particular a shelf stacking device (9) as claimed in claim 1, on which the height of a load-bearing means (12) is adjustable, and a trolley (21) on the load-bearing means (12) is moved along at least one guide track (23) and by means of which at least one load-bearing unit (16) is received and transported, which trolley (21) is guided by means of height guide elements (31), in particular guide rollers, on the at least one guide track (23), **characterised in that** the height guide elements (31) are optionally supported so that they roll on the guide track (23) in order to effect a displacement relative to the load-bearing means (12) or, if the trolley (21) is supported in a fixed position on the load-bearing means (12), are supported on the load-bearing unit (16), and in order to push the load-bearing unit (16) along relative to the trolley (21) or relative to the guide track (23), a pushing motion of the displacement drive (39) is transmitted to the height guide elements (31).

36. Method as claimed in claim 35, **characterised in that** the trolley (21) is positioned between two conveyor mechanisms (63) immediately adjoining the guide track (23) at the terminal ends thereof, after which the height guide elements (31) of the trolley (21) are moved into a conveying position in order to engage with the load-bearing units (16), and then the first load-bearing unit (16) is moved by means of the displacement drive (39) of the height guide elements (31) in the direction of one of the conveyor mechanisms (63) immediately downstream.

37. Method as claimed in claim 35 or 36, **characterised in that**, at the same time as or immediately after the load-bearing unit (16) disposed on the trolley (21) is moved in the direction of displacement by the displacement drive (39), another load-bearing unit (16) is moved onto the trolley (21) by the immediately adjacent conveyor mechanism (63) disposed at the oppositely lying end.

38. Method as claimed in one of claims 35 to 37, **characterised in that** once the load-bearing unit (16) to be moved by the trolley (21) has left or almost left the height guide elements (31) of the trolley (21), a load-bearing unit (16) is pushed on to the trolley (21) by the conveyor mechanism (63) downstream of the height guide elements (31) at the other end.

39. Method as claimed in one of claims 35 to 38, **characterised in that** the feed rate of the displacement drive (39) and the height guide elements (31) is the same both when picking up and despatching several load -bearing units (16).

40. Method as claimed in one of claims 35 to 39, **characterised in that** the feed rate of the displacement drive (39) or the height guide elements (31) is higher when picking up or despatching a load-bearing unit (16).

41. Method as claimed in claim 35 or 36, **characterised in that** a common control mechanism co-operates with the displacement drive (39) of the trolley (21) and/or drives of the immediately adjacent conveyor mechanisms (63), and sensors (68) are disposed in the region of the trolley (21) and/or the conveyor mechanisms (63), and when the sensor (68) is activated, the drive of the other conveyor mechanism (63) between the conveyor track (23) and the immediately adjacent conveyor mechanism (63) is activated by a first load-bearing unit (16) in order to transfer a load-bearing unit (16) onto the trolley (21) immediately or when the first load-bearing unit (16) has left the conveyor track (23).

## Revendications

1. Véhicule de transport (8), en particulier appareil de commande de rayonnages (9) avec un moyen de réception de charge (12) pour la réception d'un chariot de transport (21), qui présente une plate-forme (40) pour la réception selon le besoin d'un support de charge (16), en particulier d'une palette (17) et qui est équipé pour le dépôt ou la réception du support de charge (16) de mécanismes de roulement (30) avec des organes de guidage en hauteur (31), et les organes de guidage en hauteur (31) sont déplaçables le long de voies de guidage en hauteur (32) disposées au moins au moyen de réception de charge (12) dans un plan de transport (35) s'étendant à peu près perpendiculairement à la voie de guidage en hauteur et/ou latérale du moyen de réception de charge (12) et sont reliés à au moins un appareillage de roulement (39) pour le mouvement de roulement désolidarisé du moyen de réception de charge (12), et la plate-forme (40) est reliée à un entraînement (41) pour un mouvement de relevage respectivement d'abaissement relativement aux mécanismes de roulement (30) à peu près perpendiculairement au plan de transport (35), **caractérisé en ce qu'**au moins un dispositif de réglage (48) est associé aux organes de guidage en hauteur (31) qui présente une première position de repos dans laquelle les organes de guidage en hauteur (31) du chariot de transport (21) s'appuient sur les voies de guidage en hauteur (32) et au moins une autre position de transport dans laquelle les organes de guidage en hauteur (31) sont hors prise avec les voies de guidage en hauteur (32), et les organes de guidage en hauteur (31) logent respectivement supportent d'une manière déplaçable selon le besoin au moins un support de charge (16) par l'appareillage de roulement (39).

2. Véhicule de transport selon la revendication 1, **caractérisé en ce que** le dispositif de réglage (48) est disposé au moyen de réception de charge (12) du chariot de transport (21) et présente des organes d'entraînement (51) en liaison avec le chariot de transport (21) ainsi qu'une direction de levage (52) s'étendant à peu près perpendiculairement au plan de transport (35).

3. Véhicule de transport selon la revendication 1 ou 2, **caractérisé en ce que** le dispositif de réglage (48) est disposé entre les organes de guidage en hauteur (31) et un châssis de support (29) du chariot de transport (21) et présente une direction de levage (52) s'étendant à peu près perpendiculairement au plan de transport (35).

4. Véhicule de transport selon l'une bu plusieurs des revendications précédentes, **caractérisé en ce que** le dispositif de réglage (48) est associé à au moins quelques- uns des organes de guidage en hauteur (31) sur un côté longitudinal du chariot de transport (21).

5. Véhicule de transport selon l'une ou plusieurs des revendications précédentes, **caractérisé en ce que** le dispositif de réglage (48) est associé à chaque fois à une paire d'organes de guidage en hauteur (31) disposée dans un même plan de section transversale perpendiculairement à la direction longitudinale du chariot de transport (21).

6. Véhicule de transport selon l'une ou plusieurs des revendications précédentes, **caractérisé en ce que** les voies de guidage en hauteur (32) sont réalisées par des voies de guidage (23) en forme de profilés et que les voies de guidage (23) sont disposées d'une manière ajustable perpendiculairement au plan de transport (35) en face d'un châssis de support du moyen de réception de charge (12), et que le dispositif de réglage (48) est disposé entre les voies de guidage (23) et le châssis de support du moyen de réception de charge (12).

7. Véhicule de transport selon l'une ou plusieurs des revendications précédentes, **caractérisé en ce que** sont disposés d'une manière fixe au moyen de réception de charge (12) des bras de support (59) pour la retenue du chariot de transport (21) de préférence dans une position préréglable ou dans la position de transport.

8. Véhicule de transport selon l'une ou plusieurs des revendications précédentes, **caractérisé en ce que** les bras de support (59) pour le chariot de transport (21) sont disposés d'une manière ajustable au moyen de réception de charge (12) dans la direction s'étendant perpendiculairement au plan de transport (35) et que le dispositif de réglage (48) est disposé entre ceux-ci et le moyen de réception de charge (12).

9. Véhicule de transport selon l'une ou plusieurs des revendications précédentes, **caractérisé en ce que** les organes de guidage en hauteur (31) espacés les uns des autres forment dans leur position de transport des voies de transport (65) pour le support dé charge (16), et qu'un plan de transport (66) de dispositifs de transport (63) disposés directement en aval de chacun des deux côtés frontaux de voies de transport (65) du chariot de transport (21) est aligné avec un plan de transport (67) des voies de transport (65) se trouvant en position de convoyage.

10. Véhicule de transport selon l'une ou plusieurs des revendications précédentes, **caractérisé en ce que** les plans de transport (66, 67) sont inclinés relativement à un plan horizontal.

11. Véhicule de transport selon l'une ou plusieurs des revendications précédentes, **caractérisé en ce que** l'appareillage de roulement (39) pour les organes de guidage en hauteur (31) du chariot de transport (21) est réalisé pour le déplacement simultané d'un support de charge entrant et d'un support de charge sortant (16).

12. Véhicule de transport selon l'une ou plusieurs des revendications précédentes, **caractérisé en ce que** le dispositif de réglage (48) présente une table de levage (58) qui est réalisée d'une manière ajustable dans une direction à peu près perpendiculaire au plan de transport (35) par rapport au moyen de réception de charge (12) par un mécanisme bielle-manivelle (54) pouvant être entraîné de préférence par un moteur (53), avec des tiges de poussée en forme de levier coudé (55, 55').

13. Véhicule de transport selon la revendication 12, **caractérisé en ce que** les tiges de poussée (55, 55') sont reliées, quant à leur entraînement, à des éléments de levage (57, 57') logés d'une manière excentrique autour d'axes s'étendant parallèlement au plan de transport (35) et décalés de celui-ci en direction du moyen de réception de charge (12).

14. Véhicule de transport selon la revendication 12 ou 13, **caractérisé en ce que** la table de levage (58) du mécanisme bielle-manivelle (54) supportant le chariot de transport (21) dans sa position de transport relevée est liée, quant au mouvement, pour transformer un mouvement de poussée linéaire des tiges de poussée (55, 55') en un mouvement de levage respectivement d'abaissement de la table de levage (58), aux éléments de levage (57, 57').

15. Véhicule de transport selon l'une ou plusieurs des revendications précédentes, **caractérisé en ce que** le dispositif de réglage (48) présente une table de levage (58) qui est équipée à ses côtés longitudinaux opposés respectivement d'un organe d'entraînement tournant sans fin, comme d'une courroie, d'une chaîne.

16. Véhicule de transport selon l'une ou plusieurs des revendications précédentes, **caractérisé en ce que** le dispositif de réglage (48) est formé par l'entraînement (41) du mouvement de levage respectivement d'abaissement de la plate-forme (40).

17. Véhicule de transport selon l'une ou plusieurs des revendications précédentes, **caractérisé en ce que** l'appareillage de roulement (39) et/ou l'entraînement (41) pour le mouvement de levage respectivement d'abaissement et/ou le dispositif de réglage (48) est formé par une commande de positionnement pouvant être chargée en moyen sous pression, comme une commande pneumatique ou hydraulique, et que la table de levage (58) est déplaçable par la commande de positionnement relativement au moyen de réception de charge (12).

18. Véhicule de transport selon l'une ou plusieurs des revendications précédentes, **caractérisé en ce que** l'appareillage de roulement (39) et/ou l'entraînement (41) pour le mouvement de levage respectivement d'abaissement et/ou le dispositif de réglage (48) est formé par une commande de positionnement actionnable électriquement et que la table de levage (58) est déplaçable par la commande de positionnement relativement au moyen de réception de charge (12).

19. Véhicule de transport selon l'une ou plusieurs des revendications précédentes, **caractérisé en ce que** le chariot de transport (21) et le support de charge (16) sont positionnés dans la position de transport relevée du chariot de transport (21) dans et transversalement à la direction du mouvement de roulement (24) de celui-ci l'un relativement à l'autre.

20. Véhicule de transport selon l'une ou plusieurs des revendications précédentes, **caractérisé en ce que** la plate-forme (40) présente une voie de guidage longitudinale pour le guidage latéral du support de charge (16), en particulier pendant la poussée de celui-ci de la plate-forme (40) dans un de plusieurs tronçons de transport (3; 4; 5; 6) avoisinant celle-ci.

21. Véhicule de transport selon l'une ou plusieurs des revendications précédentes, **caractérisé en ce qu'**une extension longitudinale du support de charge (16), en particulier de la palette (17), est orientée en direction du mouvement de roulement (24) du chariot de transport (21), et qu'une extension longitudinale du chariot de transport (21) s'étend parallèlement au support de charge (16) et transversalement à la direction de voie (11) du véhicule de transport (8).

22. Véhicule de transport selon l'une ou plusieurs des revendications précédentes, **caractérisé en ce que** dans la position de repos abaissée du dispositif de réglage (48), des longerons longitudinaux (50) s'étendant sur une longueur (18) du support de charge (16) à distance les uns des autres s'appuient avec leurs faces d'appui (49) éloignées d'une face de chargement et espacées de celle-ci au moyen de réception de charge (12).

23. Véhicule de transport selon l'une ou plusieurs des revendications précédentes, **caractérisé en ce que** des pièces d'écartement s'étendent entre la face de chargement et les longerons longitudinaux (50) qui s'étendent transversalement au mouvement de roulement (24) du chariot de transport (21) à un écart et parallèlement les unes aux autres.

24. Véhicule de transport selon l'une ou plusieurs des revendications précédentes, **caractérisé en ce qu'**un écartement minimal (60) entre les organes de guidage en hauteur (31) disposés en rangées espacées est au moins légèrement plus grand qu'une largeur intérieure minimale (61) entre deux longerons longitudinaux avoisinants (50), et que l'écartement maximal (60) est plus petit qu'une largeur intérieure maximale (61).

25. Véhicule de transport selon l'une ou plusieurs des revendications précédentes, **caractérisé en ce que** la plate-forme (40) pouvant être positionnée entre deux longerons avoisinants (50) est espacée dans la position de transport relevée ultérieure au moins légèrement d'un côté inférieur (62) du support de charge (16), et que les faces d'appui (49) des longerons (50) sont placées sur les organes de guidage en hauteur (31).

26. Véhicule de transport selon l'une ou plusieurs des revendications précédentes, **caractérisé en ce que** sont disposés au moyen de réception de charge (12) plusieurs chariots de transport (21) déplaçables de préférence par deux organes de guidage en hauteur et latéraux (31, 33) le long de voies de guidage en hauteur et latérales disposées (32, 34) le long de ceux-ci et pouvant être commandées d'une manière synchrone, en particulier par un réglage de synchronisme de voies, et que ceux-ci reçoivent au moins un ou plusieurs des supports de charge (16) disposés dans la direction du mouvement de roulement (24) du chariot de transport (21) les uns derrière les autres.

27. Véhicule de transport selon l'une ou plusieurs des revendications précédentes, **caractérisé en ce que** les voies de guidage fixes (23) au moyen de réception de charge (12) espacées transversalement à la direction de voie (11) du véhicule de transport (8) au moins selon l'écartement (60) et s'étendent parallèlement sont formées par les profilés angulaires (22), et les branches horizontales (37) forment les voies de guidage en hauteur (32) pour les organes de guidage en hauteur (31) respectivement les rouleaux de guidage formant ceux-ci, et les branches érigées (38) les voies de guidage latérales (34) pour les organes de guidage latéraux (33) respectivement les rouleaux de guidage formant ceux-ci.

28. Véhicule de transport selon l'une ou plusieurs des revendications précédentes, **caractérisé en ce que** les faces d'appui (49) du support de charge (16), dans la position de repos abaissée du chariot de transport (21), s'appuient au moins par zones à des faces partielles des voies de guidage (23), en particulier aux branches érigées (37).

29. Véhicule de transport selon l'une ou plusieurs des revendications précédentes, **caractérisé en ce que** la table de levage (58), dans sa position de transport relevée, est reliée relâchablement au chariot de transport (21) par des installations de positionnement opposées et les organes d'entraînement (51), comme des axes de couplage.

30. Véhicule de transport selon l'une ou plusieurs des revendications précédentes, **caractérisé en ce que** le chariot de transport (21) présente une unité d'alimentation en énergie propre, en particulier une batterie pouvant être chargée.

31. Véhicule de transport selon l'une ou plusieurs des revendications précédentes, **caractérisé en ce que** le chariot de transport (21) présente un dispositif de couplage électrique et/ou mécanique, et que dans une position d'attente prédéterminée du chariot de transport (21) au moyen de réception de charge (12), le dispositif de couplage et une installation d'alimentation sont fonctionnellement reliés, en particulier connectés, pour la transmission d'énergie et/ou de signaux de commande.

32. Véhicule de transport selon l'une ou plusieurs des revendications précédentes, **caractérisé en ce que** l'installation d'alimentation présente des champs de tourbillonnement et d'autres champs d'énergie visibles ou non visibles, comme par exemple des champs lumineux, magnétiques ou analogues et comprend par exemple des éléments photo-électriques.

33. Véhicule de transport selon l'une ou plusieurs des revendications précédentes, **caractérisé en ce que** le chariot de transport (21), en particulier l'appareillage de roulement (39), l'entraînement (41) pour le mouvement de levage et d'abaissement, l'installation de commande, est reliée par une ligne de liaison transmettant des données et/ou des signaux et/ou de l'énergie à une unité d'alimentation et unité de commande disposées au véhicule de transport (8).

34. Véhicule de transport selon l'une ou plusieurs des revendications précédentes, **caractérisé en ce que** les organes de guidage en hauteur (31) du chariot de transport (21) sont formés par des élastomères, de préférence des matières thermoplastiques, ou en acier avec une enveloppe de matériau synthétique entourant ceux-ci.

35. Procédé pour charger et/ou décharger des supports de charge (16), en particulier des palettes (17), dans un entrepôt à rayonnages (7), avec un véhicule de transport (8), en particulier un appareil de commande de rayonnage (9) selon la revendication 1, sur lequel un moyen de réception de charge (12) est ajustable en hauteur, et sur le moyen de réception de charge (12), un chariot de transport (21) est déplacé le long d'au moins une voie de guidage (23), au moyen duquel est relevé et transporté au moins un support de charge (16), où le chariot de transport (21) est guidé par des organes de guidage en hauteur (31), en particulier des rouleaux de guidage, sur au moins une voie de guidage (23), **caractérisé en ce que** les organes de guidage en hauteur (31) roulent sélectivement sur la voie de guidage (23) en vue d'un déplacement relatif par rapport au moyen de réception de charge (12) ou bien, dans le cas d'une position du chariot de transport (21) fixé au moyen de réception de charge (12), supportent le support de charge (16), où pour le déplacement du support de charge (16) relativement au chariot de transport (21) ou à la voie de guidage (23), les organes de guidage en hauteur (31) sont sollicités par un mouvement de poussée vers l'avant de l'appareillage de roulement (39).

36. Procédé selon la revendication 35, **caractérisé en ce que** le chariot de transport (21) est positionné entre deux dispositifs de transport (63) faisant directement suite au côté frontal à la voie de guidage (23), à la suite de quoi les organes de guidage en hauteur (31) du chariot de transport (21) sont amenés dans une position de transport pour la mise en prise avec plusieurs supports de charge (16) et ensuite, le premier support de charge (16) est déplacé par l'appareillage de roulement (39) des organes de guidage en hauteur (31) en direction d'un des dispositifs de transport (63) directement suivant.

37. Procédé selon la revendication 35 ou 36, **caractérisé en ce que**, en même temps ou directement après la sollicitation du support de charge (16) se trouvant sur le chariot de transport (21) par l'appareillage de roulement (39), dans la direction de roulement, un autre support de charge (16) est amené par le dispositif de transport (63) avoisinant directement le côté frontal opposé vers le chariot de transport (21).

38. Procédé selon l'une des revendications 35 à 37, **caractérisé en ce que**, après que le support de charge (16) à pousser au loin du chariot de transport (21) a quitté ou a presque quitté les organes de guidage en hauteur (31) du chariot de transport (21), un support de charge (16) est poussé sur le chariot de transport (21) par le dispositif de transport (63) disposé en aval de l'autre côté frontal des organes de guidage en hauteur (31).

39. Procédé selon l'une des revendications 35 à 38, **caractérisé en ce que** la vitesse de poussée de l'appareillage de roulement (39) respectivement des organes de guidage en hauteur (31) est la même à la fois lors de l'enlèvement par poussée et lors de la mise en place par poussée de plusieurs supports de charge (16).

40. Procédé selon l'une des revendications 35 à 39, **caractérisé en ce que** la vitesse de poussée de l'appareillage de roulement (39) respectivement des organes de guidage en hauteur (31) lors de la réception ou de l'évacuation d'un support de charge (16) est plus élevée.

41. Procédé selon la revendications 35 ou 36, **caractérisé en ce qu'**il est associé à l'appareillage de roulement (39) du chariot de transport (21) et/ou à un entraînement des dispositifs de transport (63) directement avoisinants un dispositif de commande commun avec des capteurs (68) disposés au voisinage du chariot de transport (21) et/ou des dispositifs de transport (63), et que lors de l'activation du capteur (68) entre la voie de transport (23) et le dispositif de transport (63) directement suivant, par un premier support de charge (16), l'entraînement de l'autre dispositif de transport (63) est activé pour la transmission d'un support de charge (16) au chariot de transport (21) immédiatement ou après avoir quitté la voie de transport (23) par le premier support de charge (16).
